Europäisches Patentamt

**European Patent Office**

Office européen des brevets

(11) Publication number: **0 053 914**
**A1**

(12) **EUROPEAN PATENT APPLICATION**

(21) Application number: **81305705.6**

(22) Date of filing: **03.12.81**

(51) Int. Cl.³: **G 02 B 7/26**

(30) Priority: **08.12.80 GB 8039276**
**22.07.81 GB 8122612**
**15.10.81 GB 8131165**

(43) Date of publication of application:
**16.06.82 Bulletin 82/24**

(84) Designated Contracting States:
**AT BE CH DE FR GB IT LI LU NL SE**

(71) Applicant: **Combined Optical Industries Limited**
**200 Bath Road**
**Slough Berkshire SL1 4DW(GB)**

(72) Inventor: **Pasco, Ian Kenneth**
**The Nook Coxes Lane**
**Bracknell Berkshire(GB)**

(74) Representative: **Wain, Christopher Paul et al,**
**A.A. THORNTON & CO. Northumberland House 303-306**
**High Holborn**
**London WC1V 7LE(GB)**

(54) **Fibre optic connectors and lens elements therefor.**

(57) Lens elements for fibre optic waveguide connectors comprise a body of translucent material (3) having at least one lens surface (21). Extending forwardly of and beyond the lens surface are one or more projections (22). The projections are such that when two lens elements are held together with the lenses face-to-face, interengagement of the respective projections ensures that the optical axes of the lens elements are coincident or parallel, so minimising optical data transmission losses in use of the connectors. In one embodiment, the projections have a planar end face (23) lying in a plane perpendicular to the axis of the lens, and in this case abutment of the said faces on respective lens elements ensures alignment. The invention also provides connectors for fibre optic waveguides, and a method of connecting such waveguides, using lens elements of the invention.

*FIG. 1.*

EP 0 053 914 A1

- 1 -

## FIBRE OPTIC CONNECTORS AND LENS ELEMENTS THEREFOR

This invention relates to fibre optic waveguide connectors, and to lens elements useful therein.

It is known to connect together two fibre optic waveguide (hereinafter abbreviated to "f.o.w.") cables by providing on the end of each cable a connector, the connectors being releasably connectable whereby optical data can be transmitted from one cable to the other. It is also known to connect a f.o.w. cable to a receiving or emitting station in a similar manner, i.e. by providing a terminal connector on the end of the cable, the connector being releasably connectable to the station (which itself will normally include a terminal-type arrangement). The f.o.w. cable may comprise one or more f.o.w.'s.

Connectors for these purposes advantageously include a lens element (there may be a lens element for each f.o.w.) which is so arranged as to receive light from an f.o.w. accurately positioned in the connector, and to transmit the light as a collimated beam. (Likewise, a collimated beam received by the lens element will be focussed on to the end of the f.o.w.). An example of such a lens element is shown in our U.K. patent No. 1579027 to which reference should be made for further details. Such a connector is connected to another such connector (or to a receiving or transmitting station) so that the collimated beam emitted from the terminal is received in the lens of the other connector or station (and vice versa).

It is extremely important in the transmission of data by optical fibres that signal losses should be minimised, and where connectors with lens elements (as described above) are used, it has been found that the lens elements of the two part connection (i.e. connector-to-connector, or connector-to-station) must be accurately aligned. Most desirably, the lens elements will be exactly coaxial, but provided their axes are parallel some small displacement can be accommodated without substantial signal loss. However, if the two axes are neither co-incident nor parallel, signal loss becomes serious even for small deviations.

We have now devised a lens element for use in a f.o.w. connector (which term hereafter includes a receiving or emitting station) which is so constructed as to substantially reduce the risk of misalignment of the axis with that of another such lens element.

According to the present invention, there is provided a lens element for use in a fibre optic waveguide connector, which comprises a body of translucent material, at least one lens surface formed thereon, said lens surface having an optical axis, and at least one projection extending forwardly and beyond said lens surface, the said at least one projection being so arranged that, when said element is held against another such element with the respective said lens surfaces in face-to-face relationship and said projections inter-engaging, the respective optical axes of the lens surfaces are brought into coincidence or parallelism by said interengagement.

The invention further includes a pair of lens elements for use in a fibre optic waveguide connector, which lens elements each comprise a body of translucent material, at least one lens surface formed on said body, each said lens surface having an optical axis, and at least one projection extending forwardly and beyond said lens surface, such that when the said two elements are held together with the said respective lens surfaces in face-to-face relation, the respective projections interengage to bring the optical axes of the lens surfaces into coincidence or parallelism.

The invention further includes a fibre optic waveguide connector which comprises a body member having a lens element of the invention.

The invention also includes apparatus for connecting together two fibre optic waveguides, which comprises a first and a second housing, a pair of lens elements as defined above, one lens element of the pair being received in each housing; means in each housing for receiving a fibre optic waveguide such that optical data emitted from the waveguide passes through the respective lens element in the housing; means for releasably coupling the first housing to the second housing to bring the respective lens elements in face-to-face relationship with their respective projections being biased towards each other and interengaging to retain the optical axes of the two lens elements in coincidence or parallelism.

The invention further comprises apparatus for connecting a fibre optic waveguide to a receiving or transmitting station, which comprises a pair of lens elements as defined above, a receiving or transmission station with one of said lens elements mounted therein, a housing member including having the other of said lenses mounted therein; means for receiving said fibre optic waveguide in said housing; whereby optical data transmitted to or from said waveguide passes through said lens element in the housing; and means for releasably coupling said housing to said station whereby said respective lens elements are brought into face-to-face relationship and biased towards each other to cause their respective projections to interengage to hold the said lenses such that their optical axes are coincident or parallel.

The invention additionally provides a method of transmitting optical data which comprises feeding said data into a first lens element which comprises a body of translucent material including a lens surface, the said optical data passing through the first lens and being emitted therefrom as a substantially collimated beam of light; passing said collimated beam through a second lens element comprising a body of translucent material including a lens surface, said lens surface focussing said beam, and wherein each said lens element comprises one or more projections extending forwardly of and beyond its respective lens surface, and said lens elements are held together with the respective projections in engagement, the said projections being so arranged that the two lens elements are thus held with their respective optical axes coincident or parallel.

The lens elements of the invention may be made of glass or other translucent material. We prefer to make the elements as one-piece plastics mouldings.

As described above, each lens element has one or more projections extending forwardly and beyond a lens surface, the purpose of the projections being to cooperate with those on another lens element (which may or may not be identical) to ensure that the two elements are aligned and have their optical axes coincident or closely parallel. For this purpose, the precise shape and form of the projections may vary widely. In a relatively simple arrangement, a single projection can be used in the form of, for example, a continuous flange extending around the periphery of the lens surface. Alternatively, two or more projections can be provided, e.g. by making the flange discontinuous.

In one preferred arrangement, the projection(s) on the lens element are arranged simply to abut projections on another element. For this purpose, it is preferred that the or each projection should terminate in an end face, and that the end face(s) lie in a plane perpendicular to the optical axis of the lens. In this way, when two lens elements are held together, the end faces of the respective projections lie flat upon one another, so ensuring alignment or coincidence of the respective optical axes.

In another arrangement, two or more projections are provided on a lens element, with corresponding spaces therebetween, whereby when two elements are held together, the respective projections of one element are received in the respective spaces in the other element. In such an arrangement, the projections and spaces can be so shaped as to permit positive interlocking between the projections on each element and the corresponding spaces on the other element.

In another arrangement, again by way of example only, the lens elements may be in pairs such that the projections and recesses (if any) on one lens element are different from those on the other but fit together to provide the desired alignment of the respective optical axes.

A preferred embodiment of lens element of the invention comprises a generally elongate body of translucent material, said body having a longitudinal axis, said lens surface being formed at a first end of said body, with the optical axis of the lens generally coincident with the longitudinal axis of the body; an axial recess, at a second end of the body, the lens surface having a focal point in said axial recess; the recess being arranged to receive therein a fibre optic waveguide. This general form of lens element is described in our U.K. specification No. 1579027. Preferably, the recess comprises an outer truncated conical portion and an inner truncated conical portion, the outer said portion having a greater cone angle than the inner portion. The cone angle of the inner conical portion can be such that an optical fibre can extend freely to the narrow end thereof. Preferably, however, the inner conical portion narrows so that a fibre will jam or wedge therein before reaching the bottom. In this case, the point or area at which the fibre jams can be the focal point of the lens. For most purposes, with lenses of this form, it is preferred that the lens element be cylindrical with a uniformly smooth outer surface.

Lens elements of the type generally described in our U.K. specification No. 1579027 are designed to receive the end of a fibre optic waveguide. As such, the elements will normally be housed in a connector body, the connector including means, or being adapted, for coupling either to another connector or to a receiving or emitting station. In the latter, a lens element of rather different form may sometimes be used. An example of this different form comprises an elongate tube having a pair of opposed open ends and a longitudinal axis, a lens mounted in said tube intermediate the ends of the tube, the lens having an optical axis coaxial with the longitudinal axis of the tube; a portion of the tube extending forwardly and beyond the or one of the lens surfaces to constitute said at least one projection; and a portion of the tube extending rearwardly of said lens surface to constitute a recess for receiving a light receiver or emitter.

The means of coupling a connector of the invention to another such connector, or to a receiving or emitting station, may be of conventional form provided, of course, that in making the connection, the projections of the respective lens elements interengage to provide the desired alignment. However, in conventional coupling means, either the two connectors have to be different (e.g. so that one is male and the other female), or if both connectors are identical, then a third coupling member (such as a sleeve) is required to join the two together.

We have now found that the provision either of two different fittings (male and female) or of a third coupling member, is unnecessary, and that a f.o.w. connector can be so constructed as to include coupling means whereby it can satisfactorily be coupled to an identical such connector, or to identical coupling means on a transmitter or receiver or other member, without the use of any other coupling device.

In a preferred aspect of the invention, a connector for a fibre optic waveguide or waveguide bundle comprises a housing for receiving a fibre optic waveguide with the end thereof located within the housing so that light from the end of the waveguide is transmitted through a lens element of the invention in the housing, and emitted therefrom, wherein the connector element includes coupling means for releasably coupling the element to another member having identical coupling means, to form a unitary assembly of the connector element and the member, in which assembly light emitted from the said waveguide(s) is directed towards the said another member.

A principal advantage of such "hermaphrodite" connectors is that any f.o.w. having such a connector can be coupled directly to any other f.o.w. having such a connector, and to any data station or other device which has been provided with coupling means identical to those on the terminal connector itself. This avoids any necessity to match male and female parts or to use additional coupling elements.

In one preferred arrangement, the coupling means of the terminal connector comprises one or more axially extending arms, and one or more corresponding axially extending recesses, whereby the connector may be coupled to another connector or other member having identical coupling means, by interengagement of the arm(s) of each coupling means in the recess(es) of the other. Positive locking may be achieved by providing on one or more of the arms at least one laterally extending projection, with a corresponding laterally extending portion in the recess(es). In one preferred arrangement, the arms and recesses are generally L-shaped, and coupling is achieved by a bayonet fitting relationship.

To ensure that light cannot escape from, or enter, the connector when it is coupled to another member, stepped portions may be provided between contiguous surfaces of the coupling means.

It will be understood that the preferred coupling means on the connectors are arranged so that when the connector is thereby coupled to another member, the desired transmission of optical data between the member and the connector can occur. Normally, the f.o.w. will enter one end of the connector terminal axially thereof, and optical data will be axially emitted through the other end of the connector. In such cases, the preferred coupling means described (i.e. axially extending projections and recesses) will be formed at the said other end of the terminal so that, when the terminal is connected to another terminal, the two terminals are coaxial.

It is preferred (though not essential) that the connector terminals of the invention contain a lens element of the invention arranged so that light emitted from an f.o.w. end in the connector passes through the lens element and is emitted therefrom as a substantially collimated beam of light. In the preferred connectors of the invention, a lens element of the type described is slidably and snugly received axially within the housing and, when the terminal connector is coupled to another such connector containing a similar lens element, the two lens elements are axially aligned by inter-engagement of the lens projections.

It will be appreciated that, when a f.o.w., is connected to another f.o.w., or to an emitting or receiving station, utilising a pair of lens elements of the invention, the elements have to be located so that the projections thereon properly engage to ensure optical axis alignment. Thus, when for example the projections merely abut one another, it may be necessary to provide some force to hold the respective surfaces in proper abutment. Such force can, where necessary, be provided in a variety of ways such as by utilising resilience of the connector body or by incorporating one or more springs to urge the two lens elements towards one another.

The lens elements of the invention ensure mutual axial alignment, but in practice it is impossible to ensure that two connectors, which are connected together, are not subjected to stresses tending to bend or twist them out of alignment. For example, when a connector on a f.o.w. cable is coupled to a connector on a station such as on a bulkhead, gravity alone will tend to pull the cable connector out of strict alignment with the terminal on the station. Another example is in the case of two cables connected together via engagement of two connectors of the invention, where handling or accidental collision with the assembled connection can introduce a distortion which misaligns the two connectors. This effect can to some extent be countered by providing strong coupling means between two connectors, but this is not always effective and in any event increases the size of the connectors and their cost.

We have found that this problem can be substantially alleviated. In prior known connectors, it has been important to provide a rigid assembly of connector body and lens element to keep the lenses aligned so far as possible. According to a feature of the present invention, the connector is so constructed as to deliberately permit some movement of the terminal body relative to its associated lens element, without destroying alignment of the lens, i.e. without moving the lens elements projections out of engagement. By allowing some such movement, accidental collision or the effects of gravity can be accommodated without misalignment of the lenses.

Thus, according to a further feature of the invention, there is provided a connector for a f.o.w. cable which comprises a body member for receiving the end of the cable, a lens element of the invention for receiving or transmitting optical data from or to the cable, respectively, wherein the lens element is so mounted in the body member that the body member can move slightly relative to said lens element in at least one plane perpendicular to the optical axis of the lens element.

These connectors may, of course, possess more than one lens element in which case the lens elements will normally be arranged with their respective optical axes parallel to each other.

It is to be understood that whilst, in the preceding description, reference is made to the use of connectors incorporating a single lens element of the invention, the connectors of the invention may include two or more such lens elements for simultaneously connecting two or more f.o.w.'s to two or more other f.o.w.'s or to a dual or multiple channel receiver or emitter.

It will be appreciated that f.o.w.'s are generally very thin glass filaments, coated with a protective layer usually of plastics material, and two or more such f.o.w.'s are commonly placed together in a thick outer sheath of protective material. In order to join a connector to the end of an f.o.w., the protective coating has to be stripped back to expose the filament, and then the filament has to be very carefully introduced into the connector and fixed in exactly the right position. In most designs of connector, the precise positioning of the end of the f.o.w. is absolutely critical, slight aberrations resulting in significant losses in signal strength. Bearing in mind that, in practice, terminal connectors very often have to be joined to f.o.w.'s on site, i.e. in far from perfect conditions, and that usually very precise work is needed, it is understandable that many difficulties arise in practice.

In a further aspect of the present invention, we have devised a method of joining a terminal connector to an f.o.w., and terminal connectors for use in such a method, by which many of the difficulties previously experienced can be overcome or at least substantially reduced, and by which the f.o.w. can be very precisely positioned in the connector to ensure efficient signal transmission.

According to a preferred aspect of the present invention, a two part terminal connector is used, the two parts being separable. The first part is designed to receive the f.o.w. and firmly locate it therein, with the exposed end thereof precisely positioned in the first part. The second part of the connector contains a lens element of the invention and is designed to releasably receive the first part, in an exactly oriented position, whereby the f.o.w. end is automatically located precisely in the right position within the second part, relative to the lens, when the said two parts are coupled together.

The first part of the connector is so arranged that the positioning of an f.o.w. therein, in the correct position, is a relatively straightforward matter. Once this has been effected, and the f.o.w. firmly clamped or otherwise fixed in the first part, its proper positioning with respect to the second part is automatic because the first and second parts can only be coupled in one precise relative orientation.

Normally (but not essentially), the second part of the connector will be a housing in which the first part of the connector (or a portion of it) is receivable. In one suitable arrangement, one part comprises a groove slot or the like, in which the other part is receivable to accurately position it relative to the first. Means are provided to releasably hold the two parts together.

In one preferred arrangement of the first part of the connector, it comprises a base portion and a lid therefor, the base and lid each being formed with half grooves or channels which, when the lid is closed on the box, cooperate to provide one or more passageways for receiving and locating the fibre(s). The lid may be in two or more sections, so that once the f.o.w. is laid in the base portion, it can be clamped in position in stages as each lid section is closed. Conveniently, the lid or lid sections can be hinged to the base portion. Once closed, the lid provides protection for the f.o.w.

The size of the passageways is preferably such that, when the lid is closed, the f.o.w.(s) are clamped in position. However, they may also be glued or otherwise adhered to the first part of the connector, or may be tightly clamped therein by providing additional material such as Kevlar between the lid and the base on closing the lid.

An advantage of having a two or multicomponent first part of the connector, is that it enables the part to be opened up to expose the f.o.w.-receiving channels so that laying the f.o.w.'s therein is facilitated. The precise positioning of the ends of the f.o.w.'s in the first part of the connector depends on the inter-relation between the two parts of the connector, and in particular their relative positions when coupled. The arrangement may be such that, for example, the ends of the f.o.w.'s have to be adjacent an edge of the first part, or project a specific distance therefrom to be received in recesses in the second part of the connector member. We prefer to provide on the first part of the connector one or more projections which are received in corresponding recesses in the second part when the two parts are coupled. The f.o.w.'s extend into, or through, the projections of the first part and so are received in the corresponding recesses in the second part in precise positions therein.

The second part of the connector includes one or more lens elements of the invention whose principal function is to receive light emitted from the end of an f.o.w. and transmit it as a beam of collimated light (and vice versa, i.e. to receive a collimated beam and to focus it into the end of an f.o.w.).

These preferred connectors of the present invention may be single, double or multi-channel connectors. It is a particularly preferred feature of the present invention that the second part of the connector be of hermaphrodite form, i.e. that is has coupling means whereby it can be coupled directly to another connector having identical coupling means, as previously described herein.

According to a further aspect of the present invention, there is provided an f.o.w. terminal connector which comprises a body member, a first portion of the body member being arranged to receive and hold at least one f.o.w. with an end thereof precisely located relative to a second portion of the body member, the said second portion including a lens element of the invention, and wherein the first body member comprises a base (or like part) and a lid (or like part) (either of which may be in two or more sections), the base and/or the lid having open grooves or channels therein whereby, when the lid is closed on the base, there are formed one or more passageways for receiving and holding said f.o.w. therein.

In such a connector, the lid or the like part is preferably hinged to the base or like part, and means are provided for locking the parts together when the lid is closed on the base. An advantage of this construction is that it allows the first portion of the body member to be opened up to allow the f.o.w.(s) to be carefully placed in position in the grooves or channels so as to be accurately positioned with respect to the second portion of the connector. This arrangement is similar to the previously described two-part connector and reference should be made to the foregoing description mutatis mutandis. Either the base, or the lid, or both may be in sections to provide for
progressive location of the f.o.w.(s) in the first
portion of the connector.

The first and second portions of the
connector are preferably integral and the lens
element in the second portion is as previously herein
described. The f.o.w.(s), as they are laid up in the
first portion of the connector are each arranged with
their ends in the correct position relative to the
lens(es) in the second portion. This can conveniently
be achieved by, for example, butting them against a
surface (e.g. the lens element rear surface) acting
as a stop means.

It is preferred that these connectors are
of hermaphrodite form as previously herein described.
These connectors may be single, two- or multi-channel
connectors.

According to another preferred aspect of
the present invention, there is provided a two-channel
f.o.w. connector which comprises a body member having
two lens elements of the invention therein, means for
clamping a two-core f.o.w. with respect to the body
member with the two ends thereof accurately positioned
each with respect to a lens element, wherein the body
member includes coupling means of hermaphrodite design
whereby it can be coupled directly to another connector
or other body having identical coupling means thereon,
and wherein it can be coupled directly to another
identical two-channel f.o.w. connector so that the
respective lens elements in the two connectors are
accurately axially aligned.

In one such preferred arrangement, the body
member is formed with two parallel projecting tubes,
one shorter than the other, so that an identical second
connector can be offered up with its two tubes axially aligned with those of the first connector, the shorter tube of one being aligned with the longer tube of the other, and means are provided for coupling the two connectors together. Preferably, the coupling means comprise complementary projections and recesses on the two connectors, the coupling means being releasable to allow the coupled connectors to be disconnected.

In order that the invention may be more fully understood, various embodiments of connectors and lens elements will now be described, by way of example only, with reference to the accompanying drawings. In the drawings, Figures 1 to 10 form a first group, Figures 11 to 29 a second group, and Figures 30 to 46 a third group. In the drawings:

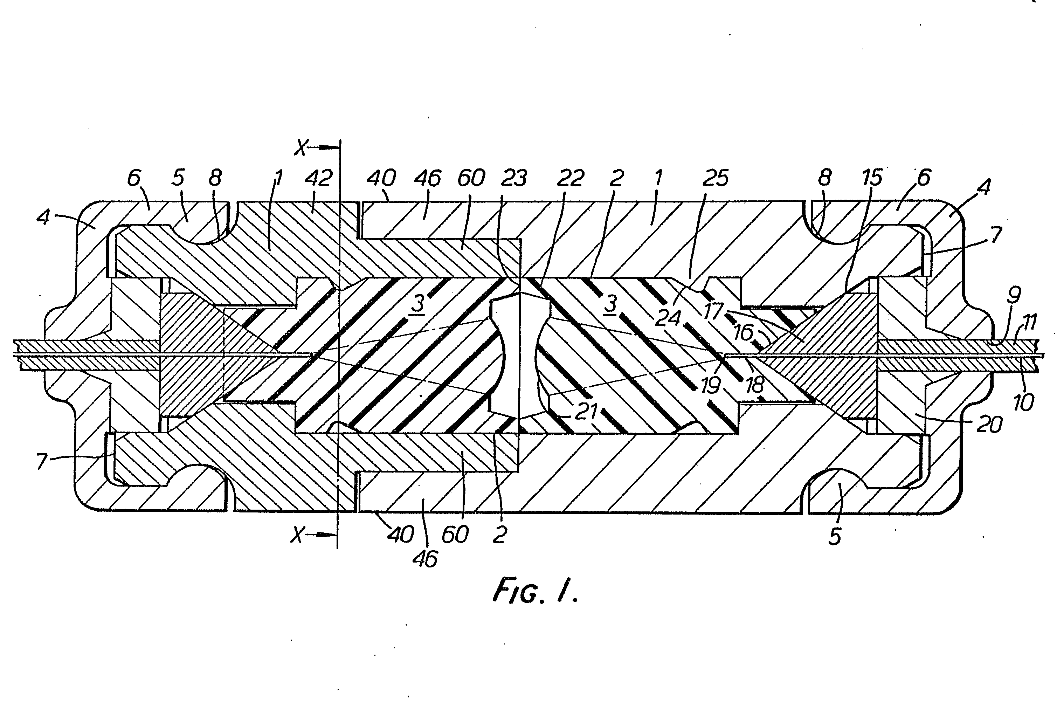

Figure 1 is an axial longitudinal sectional view of two connectors of the invention coupled together, including lens elements of the invention;

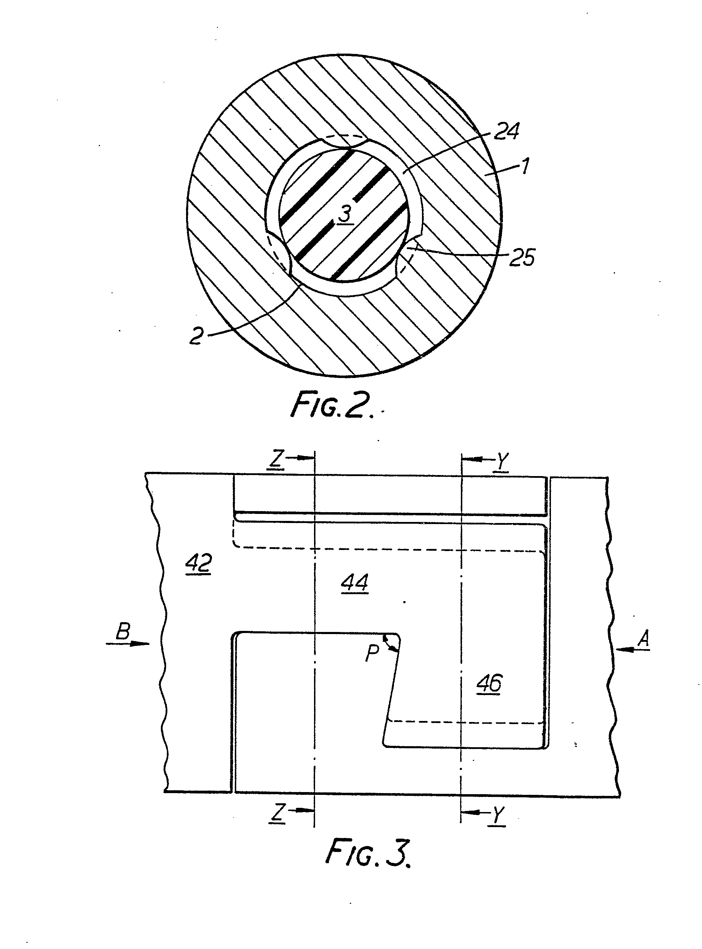

Figure 2 is a section on the line X-X in Figure 1;

Figure 3 is a side elevation of the central region of the two coupled connectors of Figure 1;

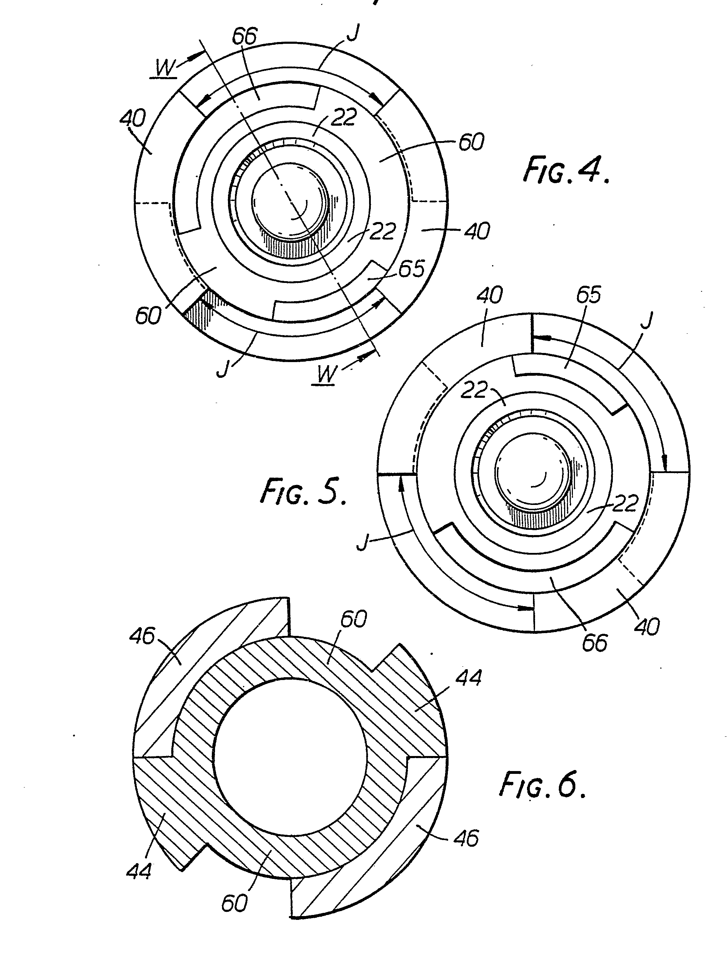

Figure 4 is a view in the direction of arrow A in Figure 3, of the two terminal connectors of Figure 1;

Figure 5 is a view in the direction of arrow B in Figure 3, of the two connectors of Figure 1;

Figure 6 is a section on the line Z-Z in Figure 3;

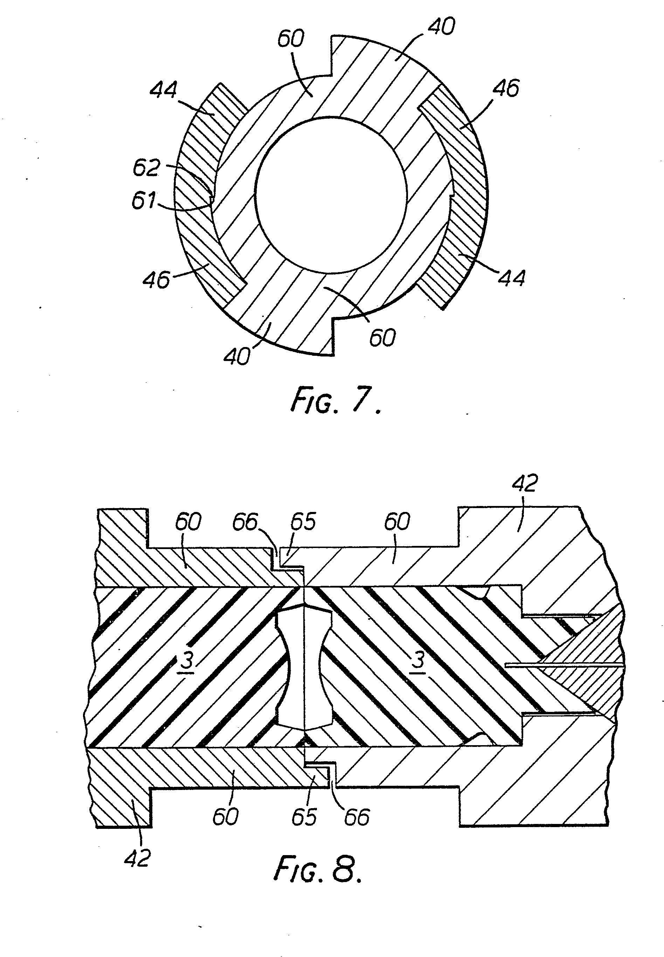

Figure 7 is a section on the line Y-Y in Figure 3;

Figure 8 is a section on the line W-W of Figure 4;

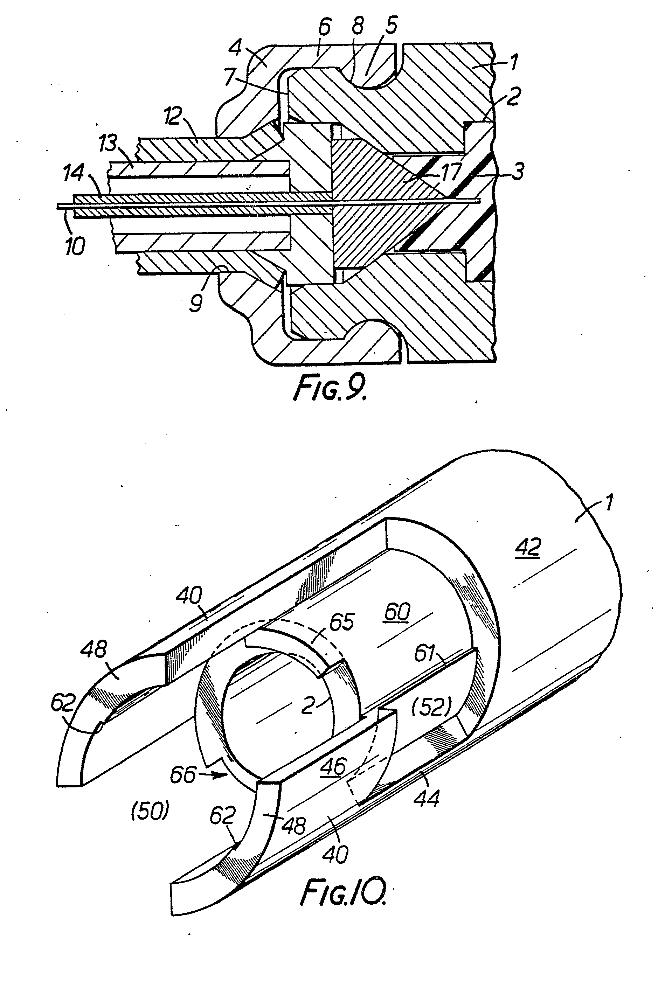

Figure 9 is a longitudinal axial section of part of a second embodiment of terminal connector of the invention;

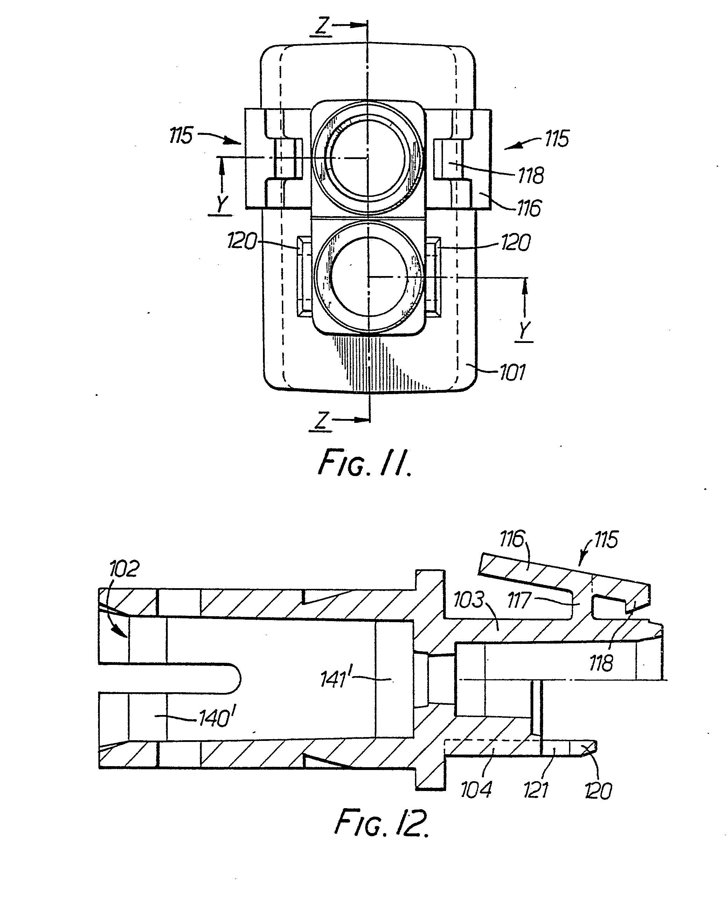

Figure 10 is a perspective view of one end of one of the terminal connectors shown in Figure 1 (but omitting the lens element);

Figure 11 is a front view of the second part of another embodiment of two part connector of the invention;

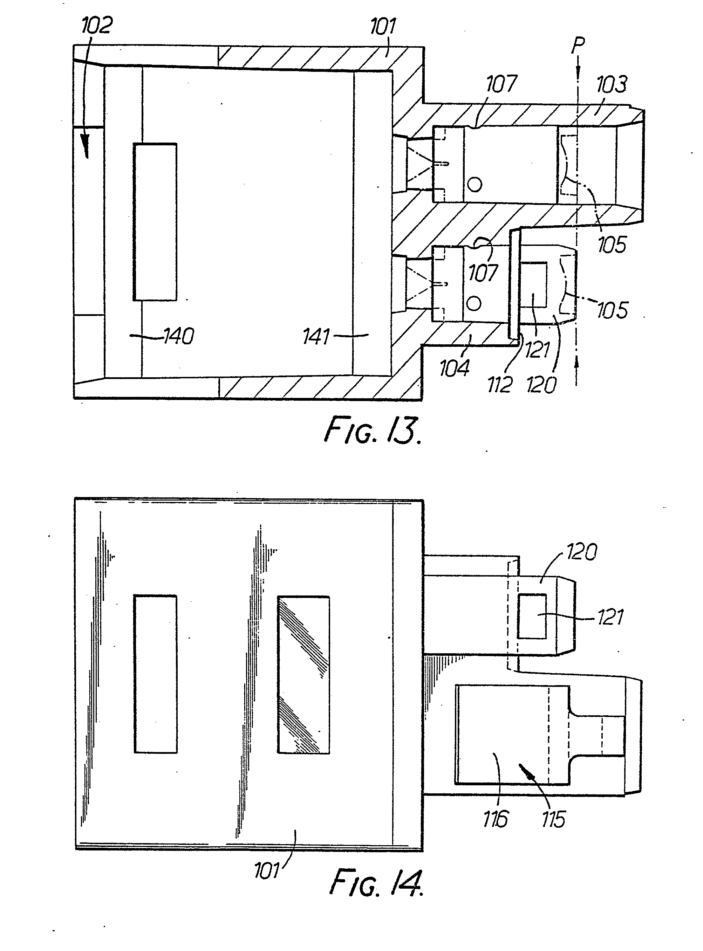

Figures 12 and 13 are sections on the lines Y-Y and Z-Z, respectively, of Figure 11;

Figure 14 is a top plan view of the second part of the connector of Figure 11;

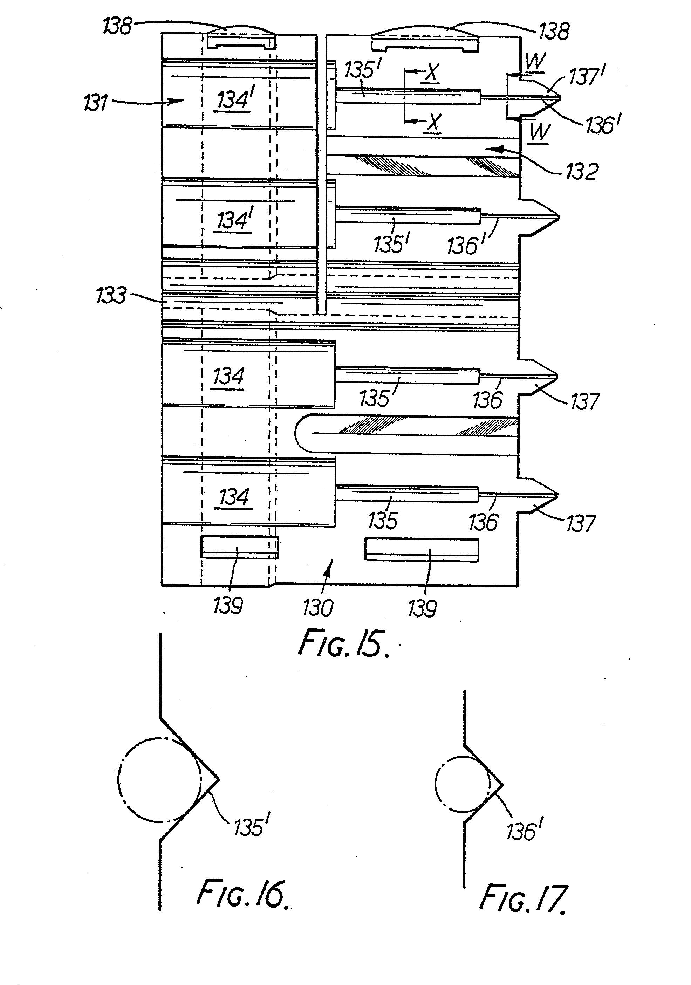

Figure 15 is a top plan view of the first part of the connector of Figure 11, in opened out condition;

Figures 16 and 17 are part sections on the lines X-X and W-W, respectively, of Figure 15;

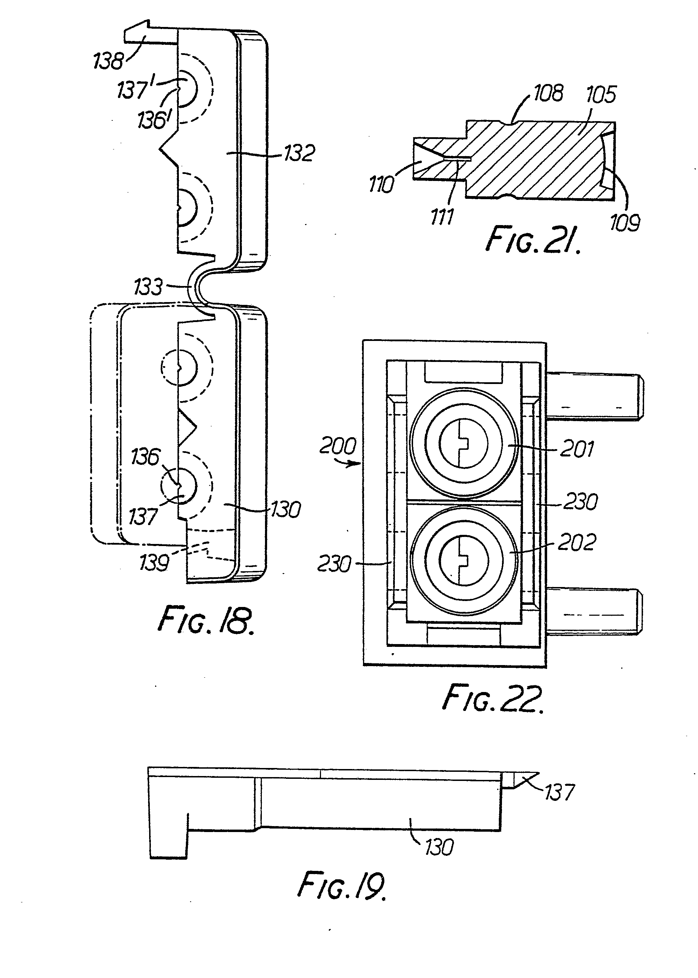

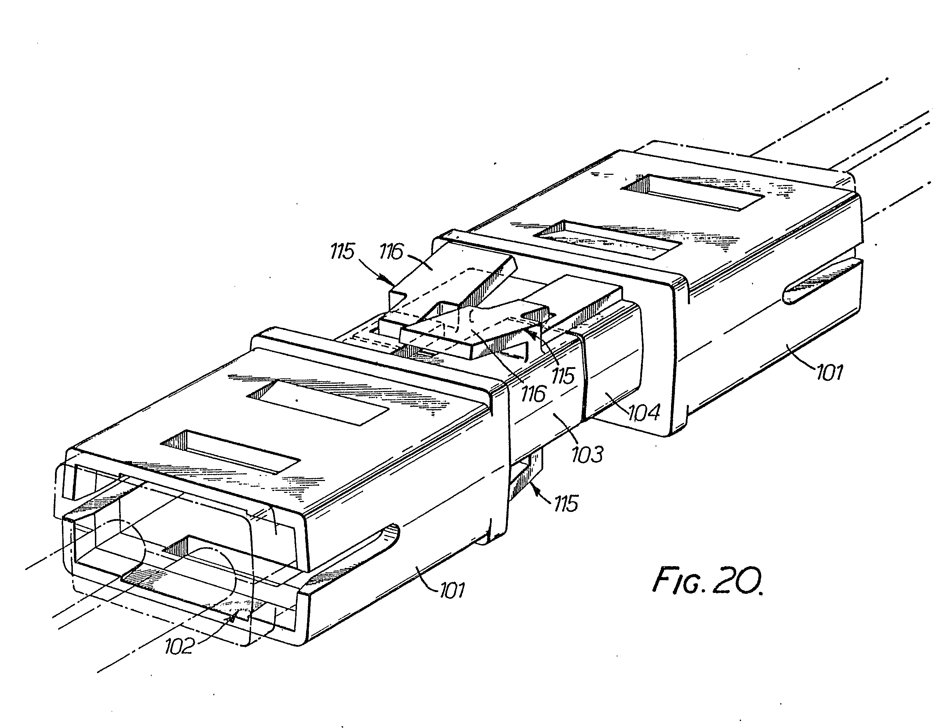

Figure 18 is an end view of the first part (from the right) in Figure 15 ;

Figure 19 is a side view (from the bottom of Figure 15) of the first part;

Figure 20 is a perspective view of two connectors (of Figures 11 to 19) coupled together and joining two f.o.w.'s;

Figure 21 is a section through a lens element for use in the connectors of Figures 11 to 20;

Figure 22 is a front view of a one-component female connector of the invention;

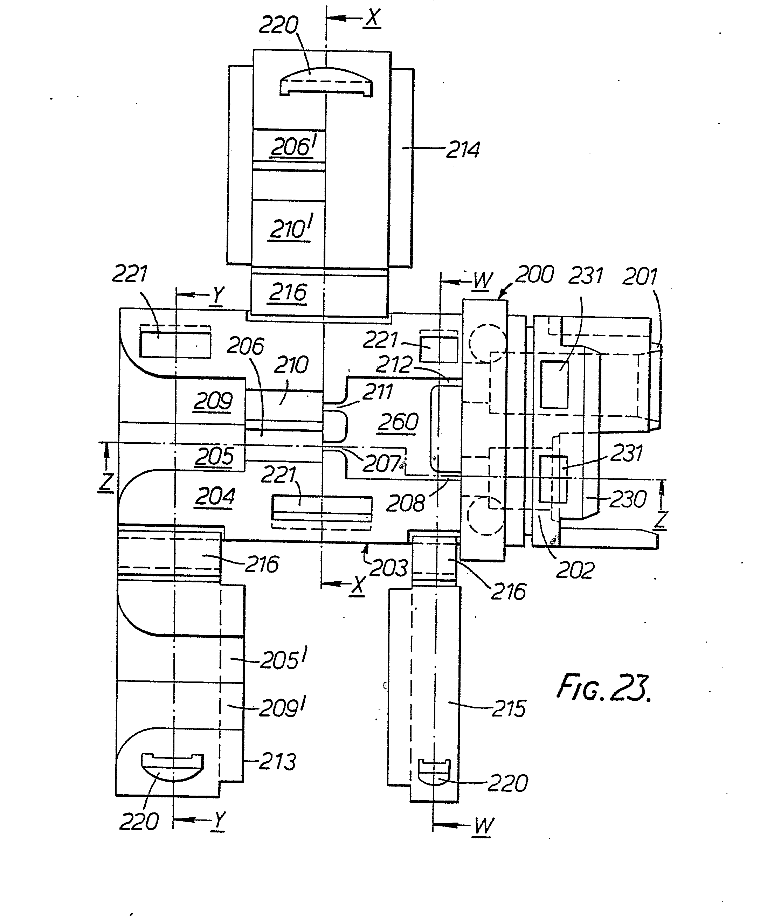

Figure 23 is a top plan view of the connector of Figure 22 in open position;

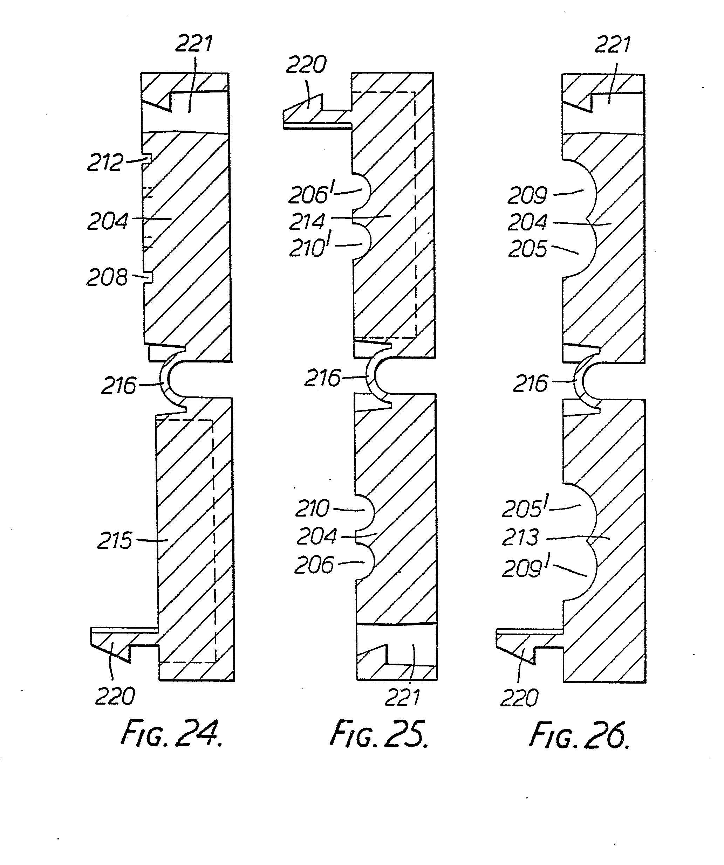

Figures 24 to 27 are sections on the lines W-W, X-X, Y-Y and Z-Z, respectively of Figure 23;

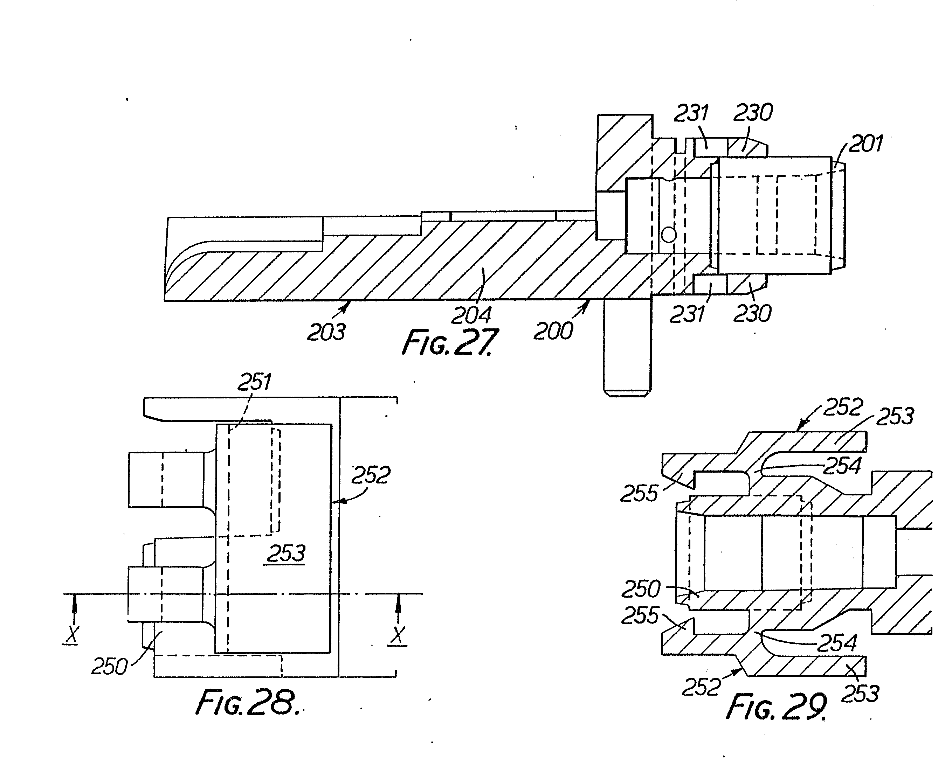

Figure 28 is a top plan view of the coupling means of a one component male connector of the invention for use with the female connector of Figures 22 to 27;

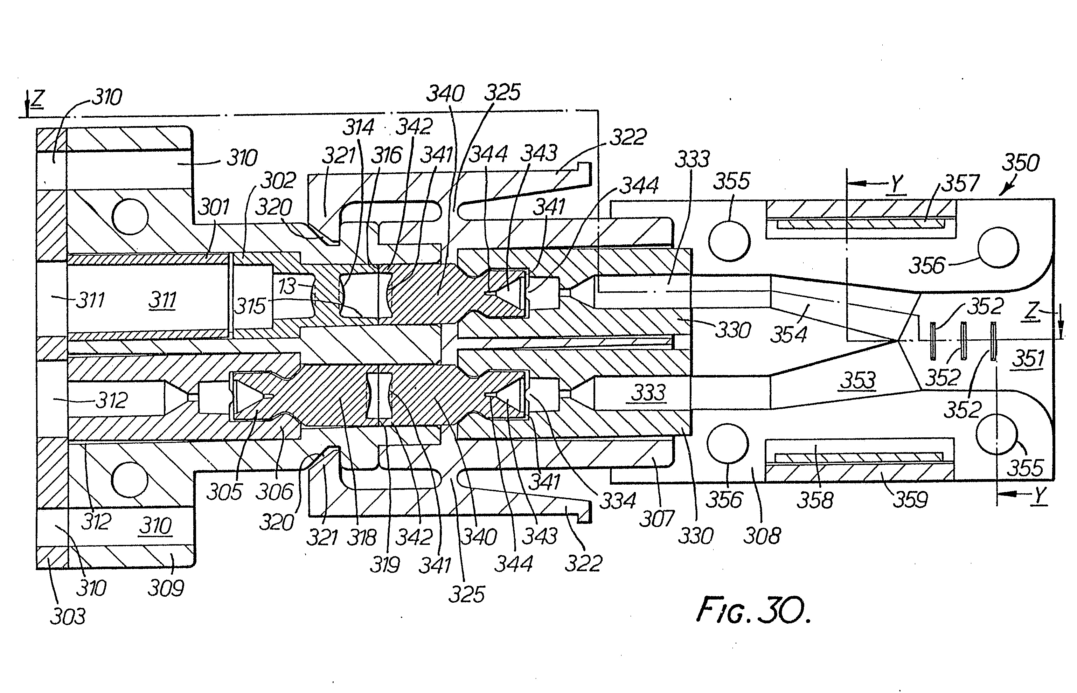

Figure 29 is a section on the line X-X of Figure 28.

Figure 30 is a longitudinal median sectional view of a first connector of the invention for a two channel f.o.w. cable, the connector being shown connected to a second connector of the invention for connection to a bulkhead, the connectors including lens elements of the invention;

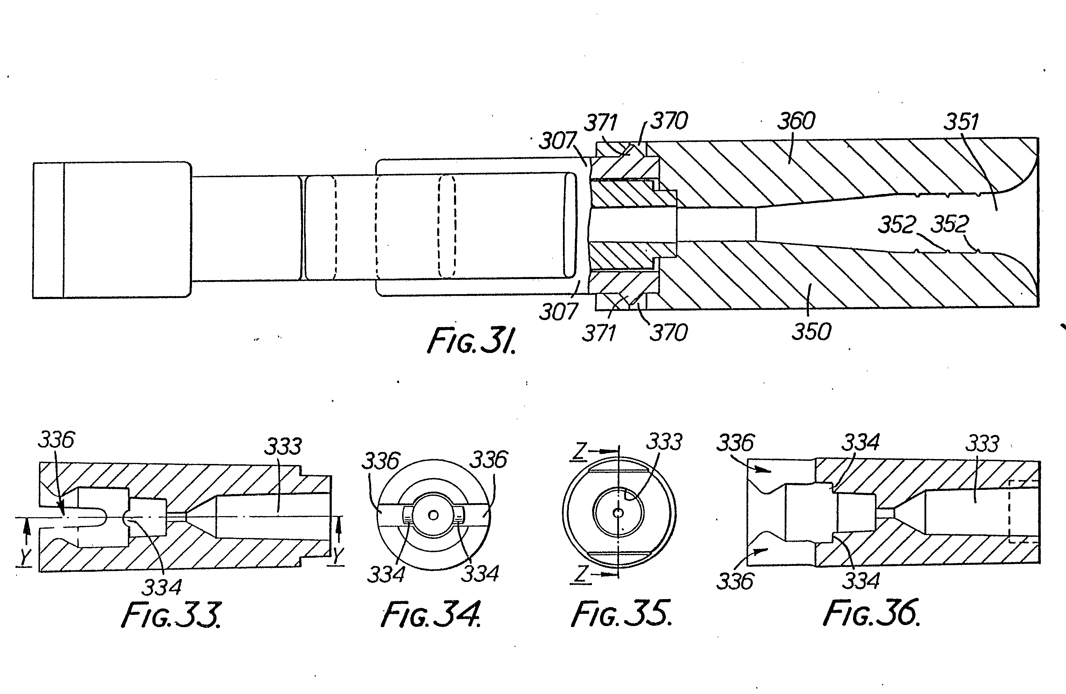

Figure 31 is a section on the line Z-Z of Figure 30;

Figure 32 is a section on the line Y-Y of Figure 30;

Figure 33 is a longitudinal sectional view of one of the sleeves in Figure 3o, being a section Z-Z of Figure 35;

Figure 34 is an end view (left hand end) of the sleeve of Figure 33;

Figure 35 is an end view (right hand end) of the sleeve of Figure 33;

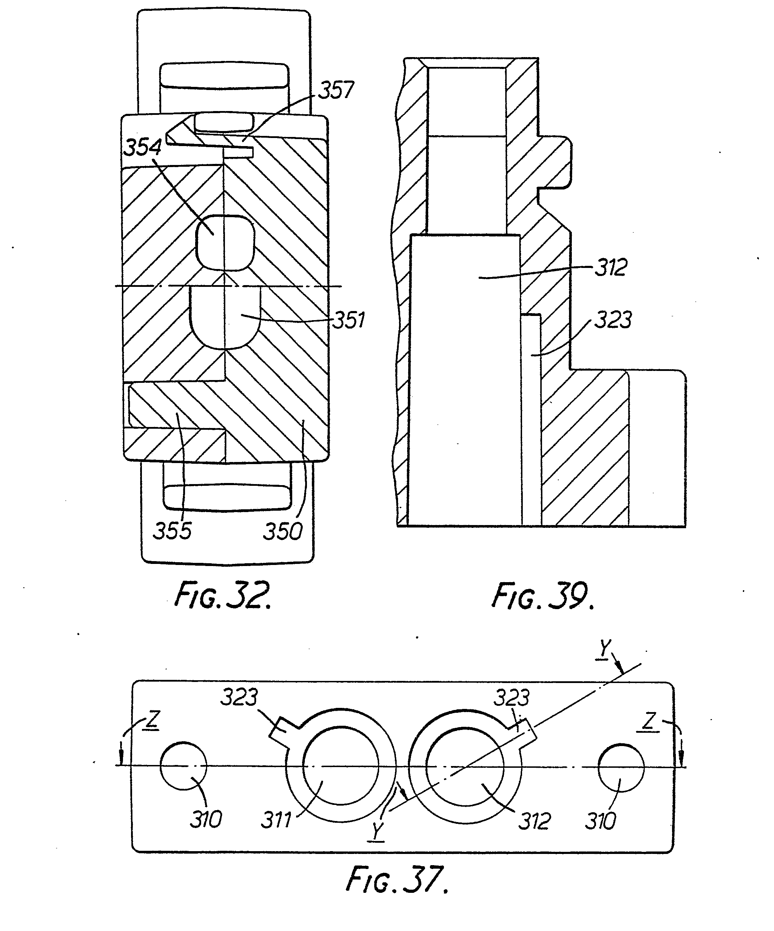

Figure 36 is a section on the line Y-Y of Figure 33;

Figure 37 is an end view (from the left-hand side of Figure 30) of the second connector of Figure 30;

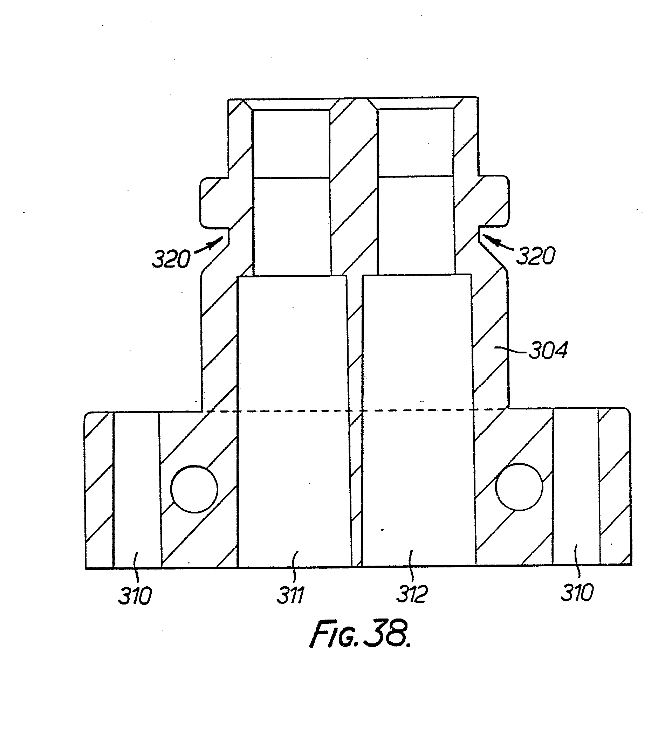

Figure 38 is a section on the line Z-Z of Figure 37;

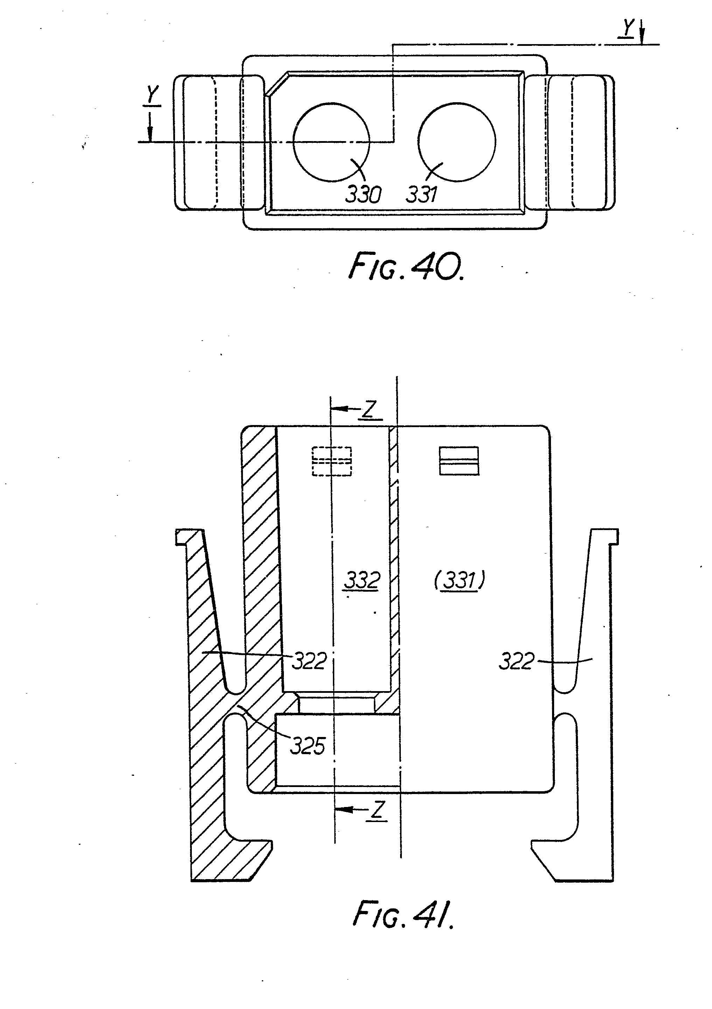

Figure 39 is a section on the line Y-Y of Figure 37;

Figure 40 is en end view (from the left hand side of Figure 30) of the body member of the first terminal of Figure 30;

Figure 41 is a half-section on the line Y-Y of Figure 40;

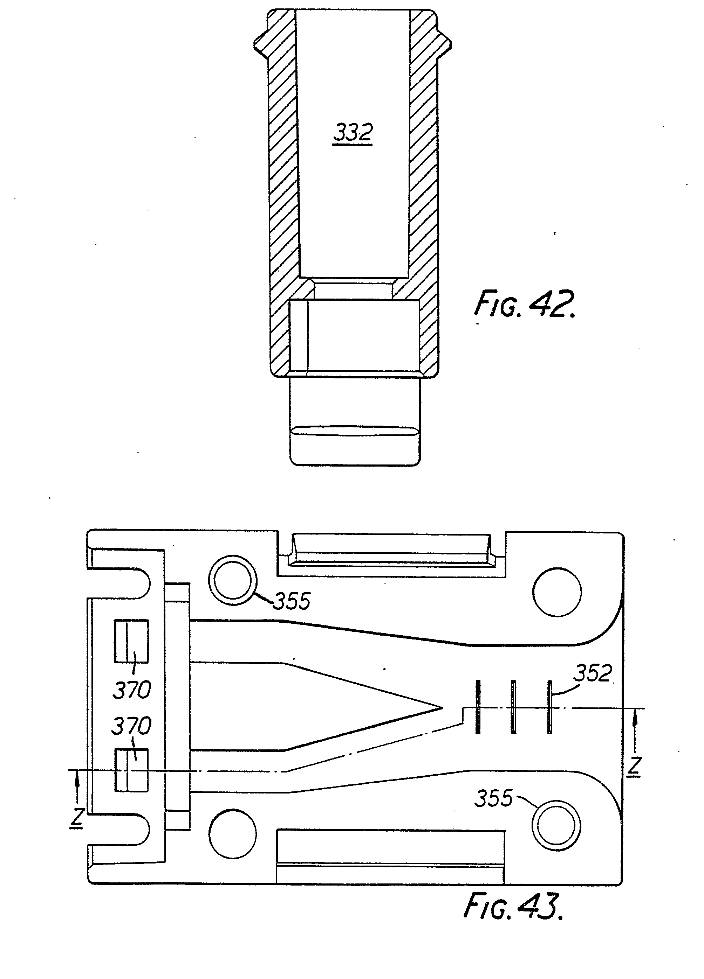

Figure 42 is a section on the line Z-Z of Figure 30;

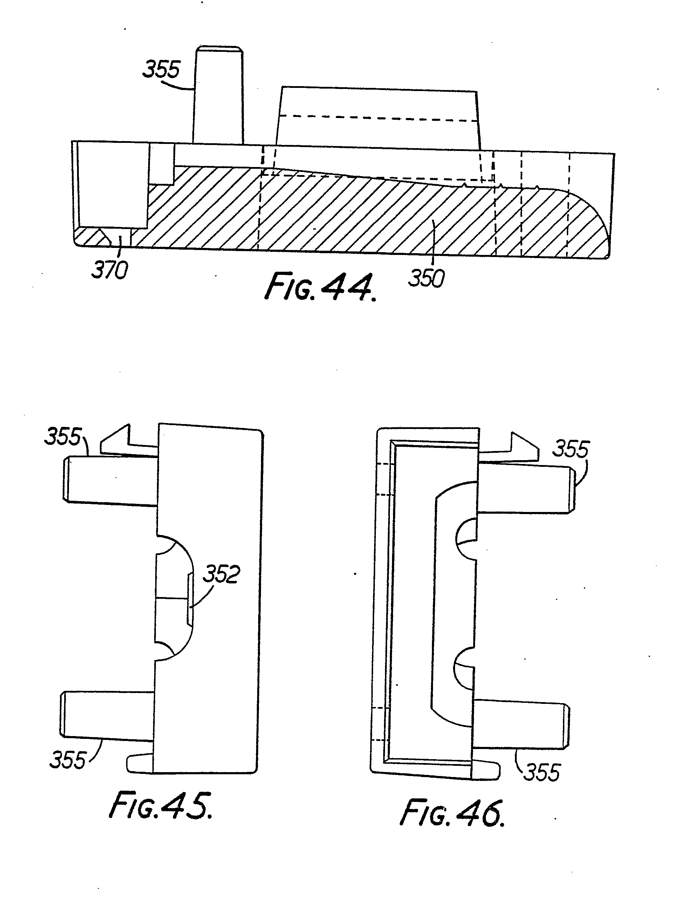

Figure 43 is a top plan view of the clamp block of Figure 30;

Figure 44 is a section on the line Z-Z of Figure 43;

Figure 45 is an end view (from the right-hand side) of Figure 43; and

Figure 46 is an end view (from the left-hand side) of Figure 43.

Referring firstly to Figures 1 to 10 of the drawings, like numerals indicate like parts. The or each terminal connector comprises a generally cylindrical housing 1, having an axial stepped through bore 2, within which is slidably and snugly received a lens element 3 of the invention. An end cap 4 is provided with an annular flange 5 inwardly directed from a skirt portion 6 thereof, and dimensioned to be received over one end 7 of the housing and be retained by engagement of the flange 5 in an annular recess 8 in the other surface of housing 1. As shown, the cap is a snap-fit, but other arrangements such as a screw-threaded arrangement, can equally be used. The cap 4 has a central bore 9 through which (in use) a fibre optic waveguide 10 passes into the housing. The waveguide has a conventional protective sleeve 11 (or is of the double-sheath type having an outer mechanical protective sleeve 12, a woven fibrous sleeve 13 to prevent pull-out, and a second protective sleeve 14 - see Figure 9).

A short distance in from the end 7 of the housing 1, the bore 2 diminishes in radius as a truncated cone portion 15 which is generally aligned with a conical recess 16 formed in the end of lens element 3. A resilient split retaining cone 17 is disposed in the region of the bore, the cone 17 extending into the conical recess 16 in lens element 3. The cone includes an axial bore for receiving the fibre 10 stripped of protecting sleeve back to its entry into cone 17. The conical recess 16 in the lens element communicates with a short axial recess or bore 18 for receiving the end of fibre 10. To provide support for the fibre 10 between cone 17 and cap 4 a washer 20 is provided.  The arrangement of cap 4, washer 20 and resilient cone 17 is such that the fibre 10 is firmly located in the housing 1, since as cap 4 is pushed onto housing 1, cone 17 is compressed to grip the fibre 10.

At the opposite end from conical recess 16, the lens element is provided with a convex lens surface 21, which is spaced from the end 19 of bore 18 by a distance equal to the focal length of the lens so that light emitted from the end of fibre 10 in bore 18 travels through the translucent lens element 3 to the lens surface 21 from which it is emitted as a collimated beam of light.  Around the lens surface 21 there is formed an annular shoulder 22 which projects forwardly of the lens surface 21, and terminates in a flat surface 23 which is perpendicular to the longitudinal axis of the lens element 3.  In the assembled condition shown in Figure 1, the shoulders 22 of the two lens elements 3 abut each other at their respective faces 23.  This mutual abutment ensures that the two lens elements are precisely aligned either coaxially or very close to coaxially.

Lens element 3 is provided with an annular circumferential groove 24, and the bore 2 of housing 1 has one or more (three are shown in Figure 2) projections 25 which are received in groove 24 to retain element 3 within the bore 2.  In assembly of a connector, the lens element 3 is slid into bore 2 of housing 1 and snapped past the projections 25 (with temporary deformation of housing 1) until the projections engage in the groove 24.

The arrangement of cap 4 and washer 20 in Figure 9 is slightly different from that shown in Figure 1 in that, in Figure 9, the bore 9 in cap 4 is enlarged to receive the extra protective sleeves on fibre 10, and the washer is profiled to engage the outer sleeve 12 against the inside of cap 4.

At the end of the housing 1 remote from cap 4, the housing is provided with coupling means. In the embodiment shown, the coupling means are formed as an integral part of the cylindrical housing 1. As shown (Figure 10), the housing has a pair of axially extending arms 40, which are of arcuate cross-section with an external diameter equal to that of the adjacent portion 42 of the housing, and an internal diameter greater than that of bore 2 in which the lens element 1 is located. The arms are diametrically opposed and are each of a generally L-shape, one limb (44) of the "l" extending forward axially from housing portion 42 and the other limb of the "L" extending circumferentially at the forward end of the limb 44, to form a key portion 46. As is clear from Figure 3, the internal angle "P" of he "L" is less than 90°.

The arcuate length of each end face 48 of the arms 40 is less than one quarter of a circle. Between the two arms 40 are two correspondingly L-shaped rece.ses 50 which each include an axially extending portion and a circumferentially extending portion 52. The L-shaped recesses are arranged to receive the L-shaped projections of another terminal connector to be coupled therewith. Coupling is effected by moving the two termina connector ends together whereby the pair of arms 40 of each connector is received in the axially extending portions of the corresponding recesses 50 in the other connector. When end faces 48 are abutting the ends of portions 42 of the housing, the key portions 46 lie adjacent the circumferentially extending recesses 52, and by turning one connector by 1/8th turn relative to the other, the key portions are received in the recesses to lock the two connectors together. Because angle P is less than 90°, the interengagement of key portions 46 and recesses 52 forms a positive lock against disengagement.

As shown most clearly in Figures 1 and 10, housing 1 projects axially forwardly of portion 42, internally of arms 40, to provide a generally cylindrical portion 60 which underlies, and forms a lower surface in, each of the circumferential recesses 52. The outer surface of portion 60 has a step 61 adjacent each recess 52, and there is a corresponding step 62 on the inside of each arm 40. The purpose of the steps is to provide additional security against ingress or egress of light when the terminal connector is coupled to another connector or other member. For the same reason, portion 60 has an arcuate projection 65, of thickness less than that of the portion 60, and a diametrically opposed recess 66, the recess 66 being of greater arcuate length than projection 65. When two connectors are coupled, the projection 65 of each is received in the recess 66 of the other, and the recess is of greater arcuate length than the projection to allow the latter to slide circumferentially in the recess as one connector housing is turned 1/8th turn to lock keys 46 in recesses 52. The projections 65 and recesses 66 lie in the regions "J" of portion 60 (see Figures 4 and 5) which are exposed when two connectors are coupled together. The engagement of the projections in the recesses prevents ingress or egress of light (see Figure 8).

The connectors of Figures 1 to 10 can be coupled and decoupled manually without the use of special tools. The housing is preferably a one piece plastics moulding, but it may be in metal or other materials. It will normally have some inherent resilience. Preferably, in the coupled condition, the connectors are positively held tightly together (by virtue of the resilience of the housing) to ensure that the two lens elements are in positive abutment via the projecting shoulders. In the preferred coupling arrangement, coupling is effected by a "push and turn" operation.

Referring now to the second group of Figures, i.e. Figures 11 to 29, Figures 11 to 14, 20 and 21 show the second part of a two-part connector comprising a housing 101 having an open end 102 (into which the first part is inserted) and, at the opposite end, two tubular projections 103, 104, in which lens elements 105 (broken lines in Figure 13) are received. Tubes 103 and 104 are parallel and each have an internal projection 107 to engage and retain therein a lens element 105 of the invention, the said lens elements each having a corresponding annular recess 108 in which projection 107 engages. The lens elements 105 (Figure 21) comprise a cylindrical block of plastics material or glass having a lens surface 109 at one end, and a conical aperture 110 at the other end, narrowing down to a small bore 111 to receive the f.o.w. An 'O' ring may be fitted over the narrower portion of element 105, to lie at 150, to act as a resilient buffer when the lens is in position in housing 101.

Each tube 103, 104 has a lens element 105 mounted therein. Tube 103 extends beyond the lens element but in tube 104, which is shorter than tube 103, the lens element extends beyond the end 112 of the tube. The forward ends of the two lens elements 105 when assembled in tubes 103, 104 lie in the same plane (line P-P in Figure 13).

On the outer side of tube 103, on the top and bottom sides of the connector, are mounted two lever clips 115, each comprising a lever 116 pivoted about a support 117 with a tooth 118 at the forward end. Extending forwardly of the end 112 of tube 104, on the top and bottom sides of the connector, are webs 120 each with a recess 121. The arrangement is such that when two connectors are aligned, with the longer tube 103 of each opposite the shorter tube 104 of the other, the webs 120 are received around the forward end of tubes 103 and teeth 118 clip into recesses 121 to hold the two connectors together (as in Figure 20). Pivoting the levers about supports 117 will release teeth 118 from recesses 121 to uncouple the assembly.

The first part of the two part connector is shown in Figures 15 to 19. It comprises a generally rectangular solid base 130 moulded of plastics material, with a two-section lid (131,132) hinged thereto by integrally formed plastics web 133. The base comprises a pair of channels, each channel being in three sections of diminishing size, 134, 135, 136. The smallest channels 136 pass through half-cone projections 137.

The two lid sections each have corresponding channels and half-cone projections (labelled prime) so that when the lid sections are closed over the base, the channels correspond to produce ducts for the f.o.w. Each lid section has a projecting clip 138 designed to engage in a corresponding recess 139 in base 130 to hold the lids releasably closed.

Figures 16 and 17 show (in chain lines) the siting of an f.o.w. in the channels 135' and 136', respectively.

This first part of the connector constitutes a cable clamp block and is used as follows. A two channel fibre optic cable has its various protective layers cut back to so that only bare fibre is laid in base channel 136, fibre with some protection is laid in channel 135, and channel 134 may accommodate the fully clad cable.

The bare fibre should extend out of channel 136 beyond the tip of half-cone 137 by 2 mm. Once the cable has been laid up in the base 130 in this fashion, lid section 131 is folded over and closed onto the base and snapped shut (clip 138 in recess 139). This grips the outer sheathing of the cable, positioning it and ensuring that it is properly aligned. Kevlar reinforcement (a long staple man-made fibre) is provided in the cable to strengthen the connection between the cable and the connector. This is laid across the front portion of base 130 (adjacent half-cones 137) and may be glued in place using, for example, cyanoacrylate glue or another catalytic resin adhesive, or may simply be held in place when the second lid section 132 is snapped shut. Use of an adhesive is optional, depending among other things on the pull-out strength required.

The f.o.w. cable is now in a clamped position in the first part of the connector, with the f.o.w. ends projecting 2 mm beyond the tips of cones (137, 137'). The assembly is now introduced (with the cones 137, 137' at the forward end) into open end 102 of housing 101, and slid forwardly therein (to the right in Figure 13). By providing guide surfaces (140, 141, 140', 141') in housing 101, the cable block unit (i.e. first part of the connector) is accurately positioned and the cones (137, 137') enter the conical recesses 110 in the rear ends of lens elements 105. Further, the protruding ends of the fibres will enter the bores 111 in lens elements 105 and hence be precisely positioned with respect to lens surfaces 109. To retain the first part of the connector within housing 101, a snap fit may be provided.

As will be understood, before offering the first part of the connector into housing 101, the ends of the fibres will be smeared with matching gel or fluid.

When the connector has been assembled, a moulded cap may be provided to fit over the ends of tubes 103, 104 to protect them until the connector is coupled to another connector or other station. For bulk head mounting, an escutcheon plate may be pushed along the outside of housing 101 until it meets a flange moulded half way along the body, where it engages and holds. It is also possible, of course, to mount the escutcheon directly on to a panel to lead the f.o.w. cables through a hole in the escutcheon plate, and then to push the connector half complete with cables back into the escutcheon plate until it engages with the snaps.

The female one-piece connector of Figures 22 to 27 is generally similar to the two-part connector previously described in Figures 11 to 21. It comprises a body 200, the forward portion of which (right hand side of Figure 23) includes two parallel tubular portions 201, 202 each to receive a lens element 105 (as shown in Figure 21). Tube 201 is longer than the lens element, but tube 202 is shorter. The tubes communicate with the rear portion of the body 200 which comprises a cable connector 203 (the illustrated embodiment being for a two channel connection). Connector 203 comprises a solid base 204 having two sets of channels therein (205-208, and 209-212). Broad channels 205, 209 receive the clad cable, narrower channels 206, 207, 210, 211, receive the cable with some of the protective cladding removed, and channels 208, 212 receive the bare fibre for insertion in the rear ends of lens elements 105. Hinged (by hinges 216) to the sides of base 203 are three lid sections 213, 214, 215. Lid section 213 has channels (labelled prime) corresponding to 205, 209 in the base, and lid section 214 has channels corresponding to 210, 206 in the base. The remaining portion of section 214, and section 215 are unchannelled. Each lid section has a clip 220 engageable in a corresponding recess 221 in base 203 when the lid is snapped shut.

Mounted laterally across the top and bottom of the tubes 201, 202 are two plates 230, each with two recesses 231 therein. These constitute the female coupling means of the connector.

The female connector of Figures 22-27 may be used with a male connector as shown in Figures 28 and 29. The male connector has a rear portion (not shown) which is the same as in Figures 22 to 27, and, at the forward end, similarly has two projecting tubular portions 250, 251 of different length, to receive lens elements. Mounted laterally across the top and bottom of the tubes 250, 251, are two resilient clips 252, each comprising a lever 253 pivoted about support 254 with a tooth 255.

The male connector is offered up to the female connector with tubular portions 250, 251, axially aligned with tubular portions 202, 201, respectively, and the arrangement is such that teeth 255 engage in recesses 231 to releasably couple the two connectors together. The respective forwards ends of tubes 201, 250 are (as shown) bevelled to fit snugly with the corresponding bevelled ends of tubes 202, 251.

In use of both these connectors, the f.o.w. is assembled in the connectors as follows. The fibre is first stripped back to pre-specified positions and then is then fitted into the open channels in the base 203. Space is provided for the fibre to be offset and placed in a small trough 260 at one end of the base, and the Kevlar reinforcement which comes between the fibre and the casing is laid back into the base and either held in place by closing a lid or actually glued in position. The sequence of actions to produce a finished termination consists in locking the outer covering of the fibre optic cable under the rear lid 213. Then, once the fibres have been placed, the lid section 215 is closed to locate the two fibres in such a manner that they can still move backwards and forwards. The lenses 105 are then inserted in tubular portions 201, 202 (or 250, 251), and the open centre section of the base, which will be covered by lid 214, is observed to see whether the fibre has entered the whole of the lens by its movement. A set of marks can be provided on the base, beyond which marks the fibre should not move if it has been properly placed within the lens.

It is to be understood that the connector of Figures 22 to 27 (or Figures 28 and 29) could be provided with hermaphrodite coupling means instead of the female/male arrangement illustrated. Also, the connector of Figures 11 to 21 could be made with a male/female coupling instead of the hermaphrodite coupling illustrated.

Referring now to the third group of Figures, i.e. Figures 30 to 46, Figure 30 shows an apertured support plate 301 for mounting on a bulkhead (not shown), a second connector 304 of the invention, for mounting via plate 301 on the bulkhead, a first connector body member 307 connected to the second connector 304, and a clamp block 308 connected to the first connector body 307.

Plate 301 and connector 304 have aligned bores 310 for fixing bolts (not shown), and also aligned bores 311 and 312. Bore 311 of connector 304 receives a spacer sleeve 301 and a lens element 302 of the invention. The element 302 is a plastics moulding of stepped tubular form having a pair of lens surfaces (313, 314) formed therein. The tubular wall 315 extends forwardly of lens surface 314 and is generally parallel to the optical axis of lens 314. It terminates in a planar end portion 316. Wall 315 constitutes the projection of the invention in respect of the lens element 302. The tubular wall 317 extending rearwardly (to the left in Figure 30) of lens 313 is snugly received in the stepped bore 311 and, in use, will have a receiver or emitter therein.

As illustrated, the other bore 312 of the second connector 304 has a sleeve 306 therein to the forward end (right hand side in Figure 30) of which is coupled a lens element 318 of the invention. Sleeve 306 is essentially the same as sleeves 330 in the first connector (see also Figures 33 to 36) and is later described with reference thereto. Lens element 318 is identical to lens elements 340 in the first connector and these are described later. The forward (right hand side of Figure 30) ends 316 and 319 of the lens elements 302 and 318 are coplanar and are within the respective bores 311 and 312 of the second.terminal 304. The outer part of terminal 304 includes a pair of recesses 320 to receive the engaging teeth 321 of finger clips 322 formed on the first terminal body 307.

Referring to Figures 37 and 39, it can be seen that body 304 of the second connector has a groove or slot 323 in each bore 311, 312, to locate items received therein which may have a corresponding longitudinal rib.

The first connector 307 of Figure 30 is illustrated (without its constituent lenses and sleeves) in Figures 40 to 42. The body 307 is formed with two identical bores 331, 332 and a pair of outer finger clips 322 as previously described, which pivot about supports 325, for locking member 304 to member 307. Within each of the bores (331, 332) of member 3o7 are located a lens element of the invention 340 and a sleeve 330. As can be seen in Figure 30, each sleeve 330 includes a bore 333 into which an f.o.w. (not shown) is fed. The left-hand end (Figure 30) of each sleeve 330 is shaped to receive in snap fit, the necked end portion of a lens element 340. The end face 341 of each lens element bears against a rounded pivot bead 334 formed in bore 333 of sleeve 330, to allow the sleeve 330 to pivot about the end face 341 of the lens element. Sleeves 330 are pressed leftwards (Figure 30) in the first connector (by the clamp block 308 to be described) and thus press lens elements 340 leftwards also into engagement with the respective lens elements 302, 318 of the second connector 304.

Each lens element 340 is an elongate plastics moulding having a lens surface 341 at one end, with an annular flange 342 projecting forwardly thereof and terminating in a planar end face. As shown, flange 342 seats against the corresponding flange 342' on lens element 318 (and the projections 315 on lens element 302) to ensure that the respective pairs of lens elements 302, 340 and 318, 340 are axially aligned or at least have their axes parallel. At the other end of each lens element 340 is a conical recess 343 with a narrow central conical blind bore 344. Each recess 343 receives a bare fibre optical waveguide element, which may extend to the bottom of bore 344 or, if its diameter is larger than that of the bottom of the bore 344, it may jam against the side of the bore 344 above the bottom thereof. The focal point of lens 341 is in the bore 344 so that light emitted from a f.o.w. in bore 344 will be received by lens 341 and transmitted as a collimated beam of light to the adjacent lens element (318 or 304), and _vice versa_.

As drawn, pivot beads 334 in Figure 30 are 90° out of position (for illustration only). They thus permit body 307 of the first terminal, and its sleeves 330, to rock slightly about lens elements 340 without disturbing the alignment of the elements, due clearances being provided within bores 331, 332. This pivoting or rocking motion in Figure 30 is in a plane perpendicular to the plane of the drawing. Up to about 10° pivot can, for example, be provided in this way, whilst still keeping the respective lenses in contact and, so, aligned. Usually, about 5° pivot is satisfactory. If more than the permitted pivot is applied, the teeth 321 of the fasteners 322 slip out of the recesses 320 and so disconnect the first terminal 307 from the second terminal 304.

Figures 34 to 36 show in more detail the sleeves 330 of Figure 30. As can be seen, at the left hand end (Figures 33, 34 and 36), the sleeve has a slot to render it expansible to receive, in snap fit, the necked end portion of a lens element 304. At their right hand end, the sleeves have a narrower portion 337 to be received in the clamp block to be described.

At the right-hand side of Figure 30 is the clamp block 308 (see also Figures 31, 32 and 43 to 46). The block is in two identical parts which clip together in face-to-face relationship and clamp the f.o.w. cable therebetween. Figure 1 is a plan view of the lower part 350, comprising channel 351 (with ribs 352) which divides into two narrower channels 353, 354. Part 350 has two upstanding prongs 355 and two bores 356. It also has a spring clip 357, and a clip recess 358 and engaging tongue 359. The upper part 360 is exactly complementary e.g. it has two upstanding prongs which engage in lower part bores 356, and two bores which receive lower part prongs 355. It also has a corresponding spring clip and clip recess.

In use, a two channel f.o.w. cable is placed in the lower part 350, and part of the cladding stripped back to separate the two f.o.w.'s into respective channels 353, 354 so that each can enter a bore 333 in sleeves 330 of the first terminal. The upper part 360 is snap fitted onto the lower parts 350 to hold the cable precisely and firmly therein. At the left-hand end (Figure 31) of the clamp block 308 are a pair of recesses 370 which receive ribs 371 upstanding from terminal body 307. The respective mating surfaces are sloped so that not only is the clamp block held to terminal body 307, but it is also biased to the left in Figure 31 to bear leftwards on the respective sleeves 330 which, in turn, as previously described, bear on the lens elements 340 to bias them to the left (Figure 30). This ensures that the lens elements 340 are axially aligned with the lens elements 304, 318 in the second terminal 304.

Grooves or recesses 372 are provided at the left-hand end (Figure 43) of clamp block 308, which engage first terminal body 307 to locate the block relative to body 307. It will be noted that (Figure 30) the right-hand ends of sleeves 330 project slightly from body 307 and are received in clamp block 308.

In Figure 30, we have for illustrative purposes only, shown two different lens elements in the second connector 304. In fact, two identical lens elements could, of course, be used. Figure 30 shows a two channel connection for a bulkhead, but the first connector could alternatively be connected to another connector of similar form, so as to provide a connection between two two-channel cables. In the latter case, both the connectors would be able to rock or pivot about their respective lens elements. Whilst a two channel arrangement has been illustrated, it is to be understood that single channel and multi-channel connectors also fall within the scope of the invention.

The invention is further illustrated in the drawings as follows:

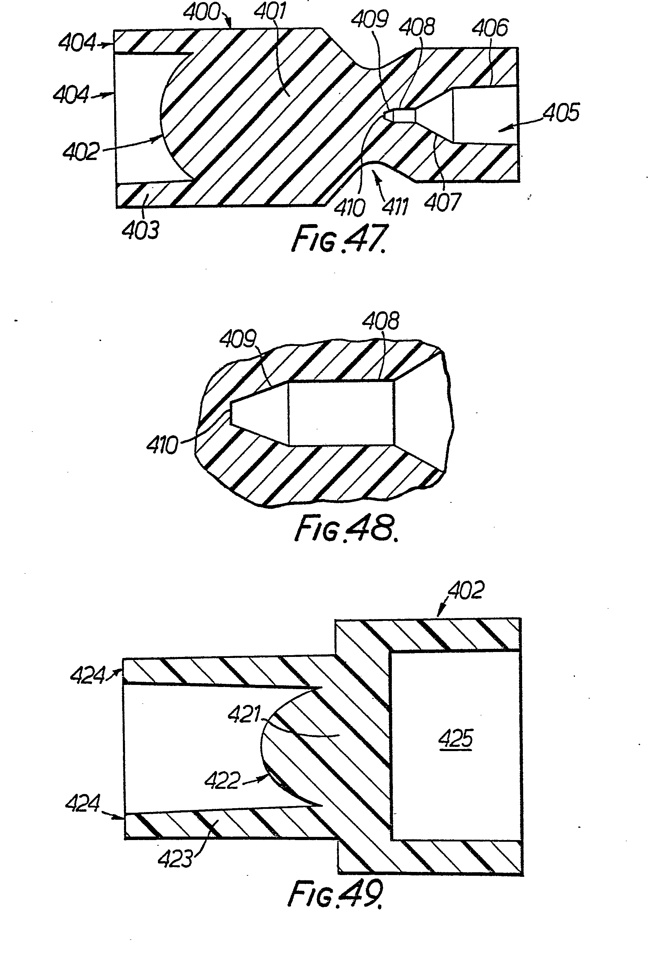

Figure 47 shows a longtitudinal axial section through another embodiment of lens element according to the invention;

Figure 48 shows a portion of Figure 47 on an enlarged scale;

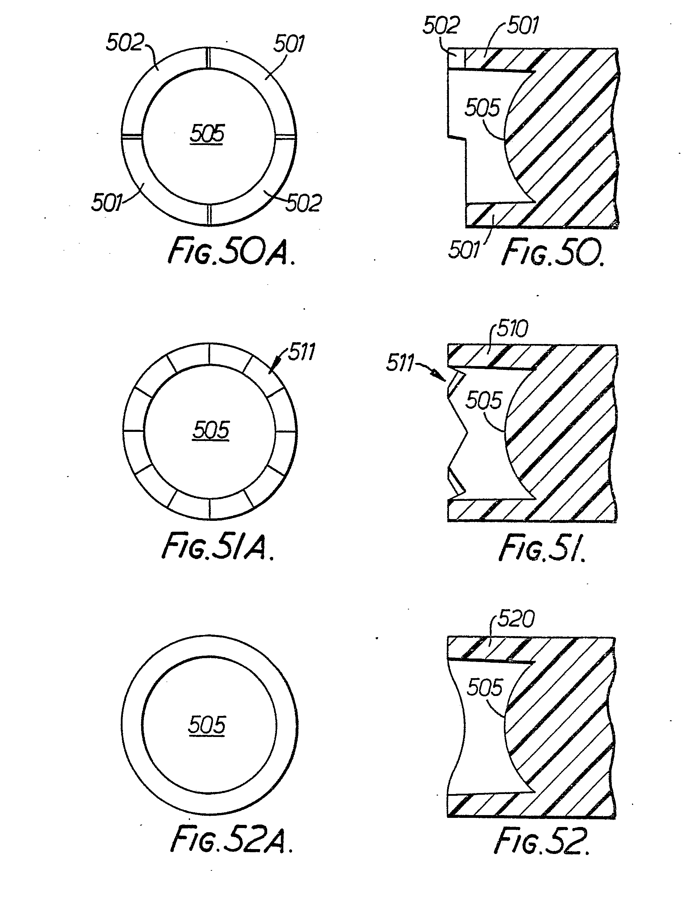

Figure 49 shows a longtitudinal section through a further embodiment of lens element of the invention;

Figures 50, 51 and 52 show modified flange portions of the lens elements of Figures 47 to 49, in section; and

Figures 50A, 51A and 52A show axial end views of the modified flange portions of Figures 50, 51 and 52 respectively.

Referring to Figures 47 and 48, the lens element 400 is generally similar to lens elements 340 and 318 shown in Figure 30. It comprises an elongate body of translucent material 401, suitably clear acrylic, having a convex lens surface 402 formed at one end thereof. Projecting forwardly of the lens 402 is an annular outerwardly tapering flange 403 terminating in a flat end face 404 lying in a plane perpendicular to the optical axis of the lens 402. At the other end of lens element 400 is a recess 405 comprising a slightly tapering outer first portion 406, a more tapering second portion 407, a generally cylindrical portion 408 and finally a truncated conical inner portion 409 having an end 410. The recess is designed to receive a fibre optic waveguide (or waveguide bundle), the waveguide being received into the portion 408 and either extending to the end 410 of the recess or jamming against the tapering walls of portion 409. Figure 48 shows the portions 408 and 409 of recess 405 on an enlarged scale.

The focal point of lens 402 lies either at the end face 410 of recess 405, or in the end portion 409. In this way, light emitted from a waveguide end in 409 travels through lens element body 401 and is emitted from lens 402 as a parallel beam of collimated light.

The middle region of lens element 400 is necked (at 411) to provide the relative movement referred to previously in connection with Figures 30 to 46.

Figure 49 is a lens element 420 similar to element 302 in Figure 30. It consists of a body of translucent material 421 in the form of a stepped tube. Lens element 422 has an elongate annular flange 423 extending around its periphery. The thickness of the flange narrows slightly to its outer end face 424 which is perpendicular to the lens axis. At the other side of body 421 is a cavity 425 for receiving an emitter or receiver. The lens element is principally for use in a bulkhead station or the like.

Lens 422 receives a collimated beam of light and focusses it into cavity 425 and on to a receiver therein (not shown). Alternatively, light from an emitter located at or about the focal point of lens 422, in cavity 425, passes through the body 421 and is emitted from lens 422 as a parallel beam. Flange 423 ensures alignment of the lens element with an element such as in Figure 47 (see Figure 30).

Figures 50 to 52 illustrate alternative forms of flange for use in the lens elements of the invention. In Figure 50, the flange is castellated so that (see also Figure 50A), it has two shorter quadrant sections 501, and two longer quadrant sections 502. When a lens element having such projections is offered up to a similar lens element, the longer quadrant sections 502 of one element seat upon the shorter sections 501 of the other element. The end faces of the sections 501 are co-planar, as are the end faces of sections 502, and the said planes are perpendicular to the axis of the lens (the lens is referenced 505).

Figures 51 and 51A show a flange 510 formed with a serrated end face 511 and in Figures 52 and 52A, the flange 520 is crenellated. In both cases, the flanges will engage with identical flanges on another lens element to hold the two elements with the optical axes of the lenses 505 in allignment.

It is to be understood that the different configurations of flange shown in Figures 50 to 52 are by way of illustration only and that many other configurations will be apparent to the skilled man whereby the alignment of lens elements in accordance with the invention can be achieved.

Claims:

1.      A lens element for use in a fibre optic
waveguide connector, which comprises a body (3;105;340)
of translucent material having at least one lens surface
(21;109;341) formed thereon, and, characterised in that
the said element (3;105) also comprises one or more
projections (22;342) extending forwardly and beyond said
lens surface, said projections being so arranged that,
when said element is held against another such element
with the said lens surfaces in face-to-face relationship and said projections interengaging, the optical
axes of the lens surfaces are brought into coincidence
or parallelism by said interengagement.

2.      A lens element according to claim 1, which
comprises a single projection in the form of a continuous flange (22;342) extending around the periphery
of the lens surface (21;109;341).

3.      A lens element according to claim 1, which
comprises two or more projections.

4.      A lens element according to claim 1, 2 or 3,
wherein the or each projection terminates in an end
face (23;319), the end face(s) all lying in a plane
perpendicular to the optical axis of the lens surface,
whereby when two lens elements are held together as
defined, the end face(s) of the respective projections
are in abutting interengagement.

5.      A lens element according to claim 1, wherein
two or more projections are provided with corresponding
spaces therebetween whereby, when two lens elements are
held together as defined, the respective projections of one element are received in the respective spaces in the other element.

6.      A lens element according to claim 5, wherein the projections and spaces are so shaped as to permit positive interlocking between the projections on each element and the corresponding spaces on the other element.

7.      A lens element according to any preceding claim which comprises a generally elongate body (3;105; 340) of translucent material having said lens surface (21;109;341) formed at one end thereof, with the optical axis of the lens generally coincident with the longitudinal axis of the body, and having at the other end an axial recess (16,18;110,111;343,344), terminating at or about the focal point of the lens, for receiving therein a fibre optic waveguide.

8.      A lens element according to claim 7, wherein said recess comprises an outer truncated conical portion (16;110;343) and an inner truncated conical portion (18;111;344), the outer said portion having a greater cone angle than the inner portion.

9.      A lens element according to claim 8, wherein the inner truncated conical portion (344) is such that the said portion narrows to a width less than that of a fibre optic waveguide so that, when such a waveguide is introduced therein, it jams against the side wall of the said inner conical recess.

10.      A lens element according to any of claims 1 to 6, which comprises an elongate tube (302) having a lens (13,314) therein intermediate the ends of the tube and coaxial with the tube, that portion (315) of the tube extending forwardly and beyond the or one of the lens surfaces (314) constituting said projection, and that portion of the tube extending rearwardly of said lens surface constituting a recess for receiving a light receiver or emitter.

11. A pair of lens elements for use in a fibre optic waveguide connector, which lens elements each comprise a body of translucent material (3;105;302, 318,340) having at least one lens surface (21;109;13, 314,341) formed thereon and, extending forwardly and beyond said lens surface, one or more projections (22; 342) the said projection(s) on each lens element being such that, when the two elements are held together with the said respective lens surfaces in face-to-face relation, the respective projections interengage to bring the optical axes of the lens surfaces into coincidence or parallelism.

12. A pair of lens elements according to claim 11, wherein the said one or more projections (342) on a first (340) of said elements are different from the said one or more projections (315) on a second (302) of said elements, the said projection on the two elements however being complementary and interengageable when the lens elements are held together as defined, to bring the optical axes into coincidence or parallelism.

13. A pair of lens elements according to claim 11 or 12, wherein at least one of said elements is as defined in any of claims 1 to 10.

14. Apparatus for connecting together two fibre optic waveguides, which comprises a first and a second housing (1;101), a pair of lens elements (3;105) as claimed in any of claims 11 to 13, one lens element
of the pair being received in each housing; means
(9,20,16,18;102) in each housing for receiving a
fibre optic waveguide such that optical data emitted
from the waveguide passes through the respective lens
element in the housing; the first housing being
releasably couplable to the second housing to bring
the respective lens elements in face-to-face relationship with their respective projections being biased
towards each other and inter-engaging to retain the
optical axes of the two lens elements in coincidence
or parallelism.

15. Apparatus for connecting a fibre optic waveguide to a receiving or transmitting station, which
comprises a pair of lens elements as defined in claim
11, 12 or 13, one of said elements (302) being mounted
in said receiving or transmission station and the other
of said elements (340) being mounted in a housing
member (307) including means (333) for receiving said
fibre optic waveguide whereby optical data transmitted
to or from said waveguide passes through said lens
element in the housing; and means (322,321,320) for
releasably coupling said housing to said station
whereby said respective lens elements are brought into
face-to-face relationship and biased towards each other
to cause their respective projections to interengage
to hold the said lenses such that their optical axes
are coincident or parallel.

16. Apparatus according to claim 14 or 15, wherein
the or each said housing comprises a body member (1;
101) having an open bore (2) therein, said lens element
(3) being slidably receivable in said bore with said
projections (22) at one end of said bore.

17.     A fibre optic waveguide connector which comprises a body member (1;101;307), having an open bore (2) therein, a lens element (3;105;340) as claimed in any of claims 1 to 10 disposed within said bore, with the projections (22;342) on said lens element extending to or beyond an open end of said bore, and means (16,17,18;102;333) for receiving in said body member a fibre optic waveguide positioned with respect to said lens element whereby light emitted from said waveguide passes through said lens element and out of said open end of said bore as a collimated beam.

18.     A connector according to claim 17 which also includes coupling means (40-52;320,321,322) for releasably coupling it to another member having identical coupling means, to form a unitary assembly of the connector and the other member, in which assembly light emitted from said waveguide is directed into said other member.

19.     A connector according to claim 18, wherein the coupling means comprises one or more axially extending arms (40,44,46;118), and one or more corresponding axially extending recesses (50,52;121), whereby the connector may be coupled to another connector or other member having identical coupling means, by interengagement of the arm(s) of each coupling means in the recess(es) of the other.

20.     A pair of connectors each as defined in claim 17, 18 or 19, wherein when the connectors are coupled together, the respective lens elements are held in face-to-face relation with their respective projections in inter-engagement to maintain the optical axes of the two lens elements coincident or parallel.

21.     A two-part fibre optic waveguide connector,
wherein the first part comprises a body (102;350) for
receiving and firmly locating therein a fibre optic
waveguide, with an exposed end of the waveguide precisely
positioned in the first part; and a second part (101;
307) releasably couplable to said first part, said
second part comprising a lens element (105;340) as
claimed in any of claims 1 to 10, coupling of the first
part to the second part automatically positioning the
said waveguide end to emit or receive optical data to
or from the lens element.

22.     A two-part connector according to claim 21,
wherein the said first part (102;308) comprises a base
(130;350) and a lid (131,132;360), one or both of which
have open grooves or channels (134,135,136;351) therein
whereby, when the lid is closed on the base, there are
formed one or more passageways for receiving and holding
said fibre optic waveguide therein.

23.     A fibre optic connector which comprises a
body member for receiving the end of a fibre optic waveguide, a lens element as claimed in any of claims 1 to
10 for receiving or transmitting optical data from or to
the said waveguide, wherein the said lens is so mounted
in the body member that the body member can move
slightly relative to the lens element in at least one
plane perpendicular to the optical axis of the lens
element.

24.     A method of transmitting optical data which
comprises feeding said data into a first lens element
which comprises a body of translucent material (3;105;
340) including a lens surface (21;109;341), the said
optical data passing through the first lens and being emitted therefrom as a substantially collimated beam of light; passing said collimated beam through a second lens element (3;105;302,318) comprising a body of translucent material including a lens surface (21;109; 13,314,341), said lens surface focussing said beam, and wherein each said lens element comprises one or more projections (22;342,315) extending forwardly of and beyond its respective lens surface, and said lens elements are held together with the respective projections in engagement, the said projections being so arranged that the two lens elements are thus held with their respective optical axes coincident or parallel.

FIG. 1.

0053914

FIG.2.

FIG.3.

FIG.4.

FIG.5.

FIG.6.

FIG. 7.

FIG. 8.

FIG.9.

FIG.10.

FIG. 11.

FIG. 12.

0053914

FIG. 13.

FIG. 14.

FIG. 15.

FIG. 16.

FIG. 17.

138

137'
136'

132

133

136
137

139

FIG. 18.

108   105

110
111      FIG. 2I.      109

200

201

230

230      202

230

FIG. 22.

137

130

FIG. 19.

FIG. 20.

FIG. 23.

FIG. 24.

FIG. 25.

FIG. 26.

FIG. 27.

231    230

201

203    204    200    231    230

251

252

253

250

FIG. 28.

X    X

252    253

254

255

250

255

252    254    253

FIG. 29.

FIG. 30.

14/22

0053914

FIG.31.

FIG.33. FIG.34. FIG.35. FIG.36.

15/22

0053914

357

354

351

355    350

FIG. 32.

312

323

FIG. 39.

Y

Z                                                    Z

323              323

310    311            312    310

Y

FIG. 37.

320

320

304

310     311        312        310

FIG. 38.

0053914

FIG. 40.

FIG. 41.

0053914

332

FIG. 42.

355

370

370

352

355

Z

Z

FIG. 43.

FIG. 44.

355

370    350

FIG. 45.

355

355

352

FIG. 46.

355

355

404 → 400 401 409 408 406

404 →

402

403

FIG.47.

405

410 411 407

409 408

410

FIG.48.

402

424

421

425

422

424

423

FIG.49.

FIG.50A.

FIG.50.

FIG.51A.

FIG.51.

FIG.52A.

FIG.52.

# European Patent Office

## EUROPEAN SEARCH REPORT

| Category | Citation of document with indication, where appropriate, of relevant passages | Relevant to claim |
|---|---|---|
| | **DOCUMENTS CONSIDERED TO BE RELEVANT** | |
| X,Y | IBM TECHNICAL DISCLOSURE BULLETIN, vol.22, no.12, May 1980 NEW YORK (US) W.B. ARCHEY et al.:"Low Loss Optical Coupler" pages 5289-5290 | |
| | * page 5289, figure 2 * | 1,2,4, 5,10- 13,15, 21,24 |
| | -- | |
| D,Y | FR - A - 2 353 069 (COMBINED OPTICAL INDUSTRIES) | |
| | * the whole document * | 1,7-9, 11-14, |
| | & GB - A - 1 579 027 | 16-18, 20,21, |
| | & DE - A - 2 722 367 | 24 |
| | -- | |
| Y | US - A - 4 147 402 (M. CHOWN) | |
| | * figure 3 * | 1,7-9 |
| | -- | |
| Y | FR - A - 2 340 558 (ISE) | |
| | * figures 2,3 * | 1,7-9 17,20 |
| | & DE - A - 2 703 887 | |
| | & GB - A - 1 569 614 | |
| | -- | |
| Y | FR - A - 2 344 857 (SMITHS INDUS- TRIES) | |
| | * figure 8 * | 1,7, 14-18, |
| | & DE - A - 2 711 171 | 20,24 |
| | & DE - A - 2 711 172                    ./. | |

**CLASSIFICATION OF THE APPLICATION (Int. Cl. 3)**

G 02 B 7/26

**TECHNICAL FIELDS SEARCHED (Int.Cl.3)**

G 02 B 7/26

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 16-02-1982 | MALIC |

EPO Form 1503.1  06.78

0053914

European Patent
Office

EUROPEAN SEARCH REPORT

Application number

EP 81 30 5705

-2-

| Category | Citation of document with indication, where appropriate, of relevant passages | Relevant to claim |
|---|---|---|
| | & GB - A - 1 572 501 | |
| | & GB - A - 1 572 502 | |
| | -- | |
| Y | FR - A - 2 394 969 (J. COSNEAU) | |
| | * figures 1,2 * | 1,7-9, 11,14- 18,20, 21,24 |
| | -- | |
| Y | GB - A - 1 429 843 (THE PLESSEY) | |
| | * figure 3 * | 1,7,11, 14-18, 20,24 |
| | -- | |
| A | GB - A - 1 558 152 (GENERAL ELECTRIC) | |
| | * figures 1,4-6 * | 3,6,19 |
| | -- | |
| A | US - A - 3 864 018 (C.M. MILLER) | |
| | * figure 7 * | 21 |
| | & DE - A - 2 449 359 | |
| | & GB - A - 1 475 192 | |
| | & FR - A - 2 248 521 | |
| | -- | |
| A | US - A - 4 029 390 (E.L. CHINNOCK et al.) | |
| | * figures 1a,1b * | 22 |
| | & DE - A - 2 557 660 | |
| | & GB - A - 1 524 874 | |
| | -- | ./. |

DOCUMENTS CONSIDERED TO BE RELEVANT

CLASSIFICATION OF THE APPLICATION (Int. Cl.³)

TECHNICAL FIELDS SEARCHED (Int. Cl.³)

## European Patent Office

### EUROPEAN SEARCH REPORT

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| E | EP - A - 0 032 722 (GTE LABORATO-RIES INCORPORATED)<br><br>* the whole document *<br><br>---- | 1,2,4,<br>7,11,<br>13,21,<br>24 | |
| | | | **TECHNICAL FIELDS SEARCHED (Int. Cl.³)** |

EPO Form 1503.2   06.78